# EUROPEAN PATENT SPECIFICATION

(11) **EP 3 161 473 B1**
(45) Date of publication and mention of the grant of the patent: **25.04.2018**
(21) Application number: 15739680.5
(22) Date of filing: 25.06.2015
(51) Int. Cl.: G01N 30/46, G01N 30/88, G01N 30/32, B01D 15/18

(54) **SECONDARY STAGE FLUID SEPARATION DEVICE CONNECTABLE WITH PRIMARY STAGE FLUID SEPARATION DEVICE**
MIT EINER PRIMÄRSTADIUMFLUIDTRENNUNGSVORRICHTUNG VERBINDBARE SEKUNDÄRSTADIUMFLUIDTRENNUNGSVORRICHTUNG
DISPOSITIF DE SÉPARATION DE FLUIDE D'ÉTAGE SECONDAIRE POUVANT ÊTRE RACCORDÉ À UN DISPOSITIF DE SÉPARATION DE FLUIDE D'ÉTAGE PRIMAIRE

(30) Priority: 25.06.2014 WO PCT/IB2014/062600; 01.12.2014 GB 201421324
(43) Date of publication of application: 03.05.2017
(73) Proprietor: Agilent Technologies, Inc., Santa Clara, California 95051 (US)
(72) Inventor: BUCKENMAIER, Stephan, 76337 Waldbronn (DE); WITT, Klaus, 76337 Waldbronn (DE); SHOYKHET, Konstantin, 76337 Waldbronn (DE); STOLL, Dwight, 76337 Waldbronn (DE)
(74) Representative: Dilg, Haeusler, Schindelmann Patentanwaltsgesellschaft mbH
(86) International application number: PCT/IB2015/054763
(87) International publication number: WO 2015/198252

(56) References cited:
- WO-A1-2011/147801
- WO-A1-2014/199201
- WO-A2-03/087756
- US-A- 4 587 993
- MONDELLO L ET AL: "MULTIDIMENSIONAL CAPILLARY GC-GC FOR THE ANALYSIS OF REAL COMPLEX SAMPLES", JOURNAL OF HIGH RESOLUTION CHROMATOGRAPHY, WILEY VCH, WEINHEIM, DE, vol. 22, no. 6, 6 May 1999 (1999-05-06), - 1 June 1999 (1999-06-01), pages 350-356, XP000834899, ISSN: 0935-6304, DOI: 10.1002/(SICI)1521-4168(19990601)22:6<350: :AID-JHRC350>3.0.CO;2-R

## Description

### BACKGROUND ART

The present invention relates to a secondary stage sample separation device, a primary stage sample separation device, a sample separation system, and a method of carrying out a multiple stage separation of a fluidic sample.

In liquid chromatography, a fluidic sample and an eluent (liquid mobile phase) may be pumped through conduits and a column in which separation of sample components takes place. The column may comprise a material which is capable of separating different components of the fluidic sample. Such a packing material, so-called beads which may comprise silica gel, may be filled into a column tube which may be connected to other elements (like a sampler, a detector) by conduits.

Background art is disclosed in US 5 738 133, US 2010/277722, JP 2014095613, WO 2012/149956, US 4 024 061, US 2003/087454, and US 2012/240666.

Two-dimensional separation of a fluidic sample denotes a separation technique in which a first separation procedure in a first separation unit is performed to separate a fluidic sample into a plurality of fractions, and in which a subsequent second separation procedure in a second separation unit is performed to further separate at least one of the plurality of fractions into sub-fractions. Two-dimensional liquid chromatography (2D LC) may combine two liquid chromatography separation techniques and plot the time dependency of detection events along two orthogonal time axes.

Two-dimensional liquid chromatography apparatuses are powerful, but may also be complex in construction, large in size, and have limited flexibility.

A two-dimensional liquid chromatography system comprising a pressure reducing mechanism between the two dimensions is disclosed in WO2013/167193.

### DISCLOSURE

It is an object of the invention to enable multiple stage or multiple dimension sample separation with a high degree of flexibility.

According to the present invention, there is provided a secondary stage sample separation device according to claim 1.

According to an aspect of the present invention, a method of carrying out a multiple stage separation of a fluidic sample according to claim 15 is further provided.

In the context of this application, the term "fluidic sample" may particularly denote any liquid and/or gaseous medium, optionally including also solid particles, which is to be analyzed. Such a fluidic sample may comprise a plurality of fractions of molecules or particles which shall be separated, for instance small mass molecules or large mass biomolecules such as proteins. Since separation of a fluidic sample into fractions involves a certain separation criterion (such as mass, volume, chemical properties, etc.) according to which a separation is carried out, each separated fraction may be further separated by another separation criterion (such as mass, volume, chemical properties, etc.) or finer separated by the first separation criterion (under improved conditions), thereby splitting up or separating a separate fraction into a plurality of sub-fractions.

In the context of this application, the term "sample separation device" may particularly denote any apparatus which is capable of separating different fractions of a fluidic sample by applying a certain separation technique. Particularly, two separation units may be provided in such a sample separation system when being configured for a two-dimensional separation. This means that the sample is first separated in accordance with a first separation criterion, and at least one or some of the fractions resulting from the first separation are subsequently separated in accordance with a second, different, separation criterion ore more finely separated in accordance with the first separation criterion. The term "separation unit" may particularly denote a fluidic member through which a fluidic sample is transferred and which is configured so that, upon conducting the fluidic sample through the separation unit, the fluidic sample will be separated into different groups of molecules or particles (called fractions or sub-fractions, respectively). An example for a separation unit is a liquid chromatography column which is capable of trapping or retarding and selectively releasing different fractions of the fluidic sample.

According to an exemplary embodiment of the invention, a primary stage sample separation apparatus is provided which is capable of standalone operation (i.e. it is configured to separate samples, detect their constituents or components and provide the relevant separation data e.g. in a form of chromatogram), and a secondary stage sample separation apparatus is provided which has a detachable fluidic interface at its fluidic inlet. Hence, it can be simply attached to or detached from a presently used primary stage sample separation device which thereby can be reversibly extended to a multistage sample separation system. Such a detachable fluidic interface may be simply plugged by a user to a fluidic outlet of the primary stage sample separation device. After such a temporarily established ad hoc multistage sample separation system has been used for a user-defined non-permanent multi-dimensional fluid separation application and the application has been finished, the primary stage sample separation device and the secondary sample separation device may be again separated from one another by a simple unplugging operation at the fluidic interface. Then, the primary stage sample separation device is ready for a new standalone separation of a further fluidic sample, and the secondary stage sample separation device is ready to be connected to another primary stage sample separation device via the multipurpose fluidic interface.

When providing such a universally usable secondary stage sample separation device, there is the challenge that it may happen that the secondary stage sample separation device, at least from time to time, eventually only for a short span of time (<1sec), generates an excess pressure or overpressure or a flow decrease or interruption which can be undesirably fed back via the fluidic interface to the primary stage sample separation device. In particular, such overpressure periods may be generated by a modulator valve of the secondary stage sample separation device when the modulator valve performs a switch operation which temporarily removes or decreases the ability of the secondary stage sample separation device to continue reception of fluidic sample which is continuously fed by the primary stage sample separation device via the fluidic interface to the secondary stage sample separation device. During such fluid acceptance interruption periods, in which the secondary stage sample separation device is not able to accept new continuously fed fluidic sample, there is the risk that the fluid flow is blocked in the inlet of the secondary stage sample separation device which generates an overpressure. This overpressure, in turn, affects the outlet section of the primary stage sample separation device, in particular a detector thereof configured for detecting fractions of the fluidic sample separated in the primary stage sample separation device. On the one hand, in extreme cases such an overpressure may result in the breakage of the detector. On the other hand, such an overpressure may deteriorate quality of the detection data generated by the detector and being indicative of the result of the primary sample separation. An exemplary embodiment overcomes or at least decreases this drawback by providing a pressure reduction mechanism in the secondary stage sample separation device and/or in the primary stage sample separation device which, in the event of such an overpressure, self-sufficiently damps or reduces this pressure so as to prevent undesired deterioration of the functionality of the detector of the primary stage sample separation device even during fluid acceptance interruption periods. It is particularly preferred when such a pressure reduction mechanism is implemented in the inlet section of the secondary stage sample separation device, because this then allows to flexibly combine the universal secondary stage sample separation device with pressure reduction mechanism with any conventional primary stage sample separation device.

When providing such a universally usable secondary stage sample separation device, there is the further challenge that different primary stage sample separation devices to be connected via the fluidic interface to the secondary stage sample separation device are usually operated autonomously so that they may have different regimes in terms of a mobile phase flow rate values used for separating the fluidic samples.. In order to enable the secondary stage sample separation device to be used with different primary stage sample separation devices operating under different flow rate regimes, the secondary stage sample separation apparatus can have a corresponding provision at the fluidic interface to cope with substantially any desired flow rate. Thus, a highly flexibly operable secondary stage sample separation apparatus is provided, which allows to extend substantially any primary stage sample separation device to a two, or more generally multiple, stage sample separation system. Also retrofitting a primary stage sample separation device into a multi-dimensional sample separation system is possible by adding this secondary stage sample separation device.

In the following, further exemplary aspects of the secondary stage sample separation device, the primary stage sample separation device, the sample separation system, and the method will be explained. Generally, any of the embodiments described herein with regard to the pressure reduction mechanism in the secondary stage sample separation device is also applicable to the primary stage sample separation device however at a position between the detector and its fluidic outlet used as fluidic interface to the secondary stage sample separation device.

The term "at least in the event of an overpressure" denotes that the pressure reduction mechanism may (or may not) also act (or be active) even if there is no overpressure.

According to an exemplary embodiment of the invention, the pressure reduction mechanism is configured for preventing the overpressure from impacting the primary stage sample separation device, in particular a detector of the primary stage sample separation device. Thus, any feedback or propagation of an overpressure induced by the secondary stage sample separation device (which is not preferred in the secondary stage sample separation device as well, but which generates more severe effects in the primary stage rather than in the secondary stage) to the primary stage sample separation device can be suppressed. Such an overpressure may be highly harmful in particular for the detector (such as a flow cell detector, in particular a fluorescence-based flow cell detector) at a downstream position of the primary stage sample separation device.

According to an exemplary embodiment of the invention, the pressure reduction mechanism is configured for reducing pressure at the fluidic interface in the event of an overpressure introduced by a modulator valve (more precisely at a coupling position between a fluidic conduit connected to the fluidic interface and the modulator valve) of the secondary stage sample separation device, in particular in the event of an overpressure generated as a result of a switching operation of such a modulator valve. When the overpressure at the modulator valve inlet has already been reduced by the pressure reduction mechanism to a lower pressure at the fluidic interface, i.e. before the overpressure has had an impact on the primary stage sample separation device, in particular the detector of the primary stage sample separation device is safely prevented from damage.

According to an exemplary embodiment of the invention, the pressure reduction mechanism is configured for reducing pressure at the fluidic interface in the event of an overpressure generated by a temporary at least partial incapability of the secondary stage sample separation device to receive fluidic sample material from the primary stage sample separation device (i.e. in case of a reduction or an entire loss of the fluid acceptance capability of the second stage). In other words, the pressure reduction mechanism may be activated automatically in (for instance periodic) periods in which the secondary stage sample separation device blocks fluidic sample flowing from the primary stage to the secondary stage. Such periods are considered as the origin of the overpressure pulses so that self-sufficient activation of the pressure reduction mechanism in the event of an overpressure is of particular advantage.

According to an exemplary embodiment of the invention, the pressure reduction mechanism is configured for at least temporarily (in particular as long as the overpressure remains) accommodating fluidic sample material in the event of a temporary at least partial incapability of the secondary stage sample separation device to receive fluidic sample material from the primary stage sample separation device. The pressure reduction mechanism may react on such an event for instance with the opening of a bypass channel for allowing the fluidic sample flowing from the first stage to the second stage to drain, consequently relieving or redirecting an overpressure.

According to an exemplary embodiment of the invention, the pressure reduction mechanism is configured for preventing a primary stage sample separation device from pumping fluidic sample material against a hard fluidic blockade at the secondary stage sample separation device. In the event of such a fluidic blockade, the pressure reduction mechanism may use another connected fluidic channel or a buffer volume for accommodating the fluidic sample to thereby suppress the overpressure.

According to an exemplary embodiment of the invention, the pressure reduction mechanism of the secondary stage sample separation device is arranged downstream of the fluidic interface and upstream of a modulator valve of the secondary stage sample separation device. In other words, the pressure reduction mechanism may be a fluidic member arranged as the first fluidic member in the secondary stage sample separation device.

According to an exemplary embodiment of the invention, the pressure reduction mechanism of the primary stage sample separation device is arranged downstream of the detector and upstream of the fluidic outlet of the primary stage sample separation device to which the secondary stage sample separation device is fluidically connectable. In other words, the pressure reduction mechanism may be a fluidic member arranged as the last fluidic member in the primary stage sample separation device.

According to an exemplary embodiment of the invention, the pressure reduction mechanism comprises a pressure relief valve, in particular arranged between the fluidic interface and a modulator valve of the secondary stage sample separation device. Such a pressure relief valve may be inactive as long as the pressure is below an overpressure threshold value and may open selectively in the event of an overpressure in order to then enable fluidic sample material to drain for pressure relief purposes.

According to an exemplary embodiment of the invention, the pressure relief valve is arranged and configured to disable flow of fluidic sample apart from a fluidic path between the fluidic interface and a modulator valve of the secondary stage sample separation device in the absence of overpressure (or to enable flow of fluidic sample only between the fluidic interface and a modulator valve of the secondary stage sample separation device in the absence of overpressure), and to split off flow of fluidic sample through the pressure relief valve away from said fluidic path in the event of an overpressure. For this purpose, the pressure relief valve may be arranged at or as part of a fluidic T-piece. During normal operation, i.e. in the absence of an overpressure, the flow of the fluidic sample is enabled between two connections of the T-piece and the pressure relief valve is in an inactive state. In the event of an overpressure however, a valve body of the pressure relief valve is displaced by the overpressure fluidic sample so that a third connection of the fluidic T-piece is opened to allow the excessive fluidic sample to drain via this additional channel through the pressure relief valve. Thereby, the overpressure is relieved.

According to an exemplary embodiment of the invention, the pressure relief valve is a spring biased ball valve. Thus, a spring (or any other biasing element, for instance a magnetic biasing element) biases a ball (or any other valve body such as a cone) into a position in which a fluid drain path is normally fluidically decoupled from the fluidic sample. Only when the pressure exceeds a certain threshold value (i.e. when an overpressure is present), the force of the over pressurized fluidic sample moves the ball against the spring force and thereby opens the drain path as an additional fluidic channel.

Alternatively, the pressure relief valve may be one of a spring loaded plate valve, an electrically, mechanically, hydraulically or pneumatically controlled active valve, a first tube with a radial opening closed by an elastic second tube (i.e. a so-called Dunlop valve), a counter-pressure loaded ball valve or plate valve, and an electrically driven valve.

According to an exemplary embodiment of the invention, the pressure reduction mechanism comprises an elastic member being elastically expandable in the event of an overpressure to thereby temporarily accommodate fluidic sample material for reducing pressure. An electric analogue to the elastic member is a capacitor. Such an elastic member may be a tube portion (through which the fluidic sample flows) showing sufficient elasticity and being capable of being expanded by fluid overpressure so as to temporarily accommodate additional amounts of fluidic sample. Such an elastic member may be made of an elastically deformable material such as an elastic plastic, or may be made of a metal having a sufficient elasticity. For instance, the elastic member may be configured so as to be capable of temporarily accommodating an additional fluid volume in a range between 1 µl and 3 µl. It may serve as a pressure-activated buffer volume.

According to an exemplary embodiment of the invention, the elastic member is configured as a flow-through member arranged in a fluidic conduit between the fluidic interface and a modulator valve of the secondary stage sample separation device. Thus, the elastic member may form part of the fluidic conduit fluidically connecting the fluidic interface with the modulator valve of the secondary stage sample separation device so that the pressure reduction mechanism can be provided in a compact way and with low effort.

According to another exemplary embodiment of the invention, the elastic member is arranged in a side path (for instance in a fluidic path bifurcating from the fluidic conduit) of a fluidic conduit between the fluidic interface and a modulator valve of the secondary stage sample separation device. In such an embodiment, a fluidic T-piece may be provided which has one connected conduit into which a certain portion of the fluidic sample flows during a certain operation mode of the secondary stage sample separation device. However, in the event of an overpressure caused by a blockage of the fluidic path from the primary stage sample separation device to the secondary stage sample separation device, the amount of fluidic sample flowing through the side path and filling the elastic member arranged therein can be temporarily increased. In an embodiment in which the elastic member has a blind end, the temporarily buffered fluidic sample may flow back from the elastic member towards the modulator valve of the secondary stage sample separation device after the overpressure has finished. Thus, no fluidic sample is lost. In another embodiment in which the elastic member has an end connected to a drain, the fluidic sample may at least partly flow off so that it can be prevented that historic fluid is later fed forward into the modulator valve for further separation.

According to an exemplary embodiment of the invention, the pressure reduction mechanism comprises a fluid restrictor having a higher fluidic impedance than the elastic member and being in fluid communication with a fluidic conduit between the fluidic interface and a modulator valve of the secondary stage sample separation device. An electric analogue to the fluid restrictor is an ohmic resistor. An example for such a fluid restrictor is a spatially narrowed fluidic conduit. In a normal operation mode without overpressure, substantially no or only a small amount of fluidic sample flows through the fluid restrictor (and for instance from here to a drain or a waste container). However, when the pressure increases, the amount of fluid which flows through the fluid restrictor increases as well. Thus, with a very simple passive fluidic member in form of the fluid restrictor, a failure-proof overpressure protection may be achieved and at the same time a backflow of historic liquid is avoided.

According to an exemplary embodiment of the invention, the fluid restrictor is arranged in a fluidic path which is branched off from the fluidic conduit between the fluidic interface and the modulator valve to thereby branch off fluidic sample material in the event of an overpressure. Hence, a fluidic T-piece may be implemented having a first connection towards the fluidic interface, a second connection towards a modulator valve and a third connection towards the fluid restrictor.

According to an exemplary embodiment of the invention, the fluid restrictor is connected to a waste container or a waste conduit. Thus, it can be prevented that historic fluidic sample accumulates in the narrow structures of the fluid restrictor, which results in a reliable protection against carryover.

According to an exemplary embodiment of the invention, the pressure reduction mechanism comprises at least two of the pressure relief devices having the above mentioned features, the elastic member having the above mentioned features, and the fluid restrictor having the above mentioned features. It is in particular advantageous that a highly safe pressure relief valve is combined with a reliably reversibly operating elastic member and/or fluid restrictor. The pressure relief valve is particularly effective when an overpressure remains for a long period or has a high amplitude. However, a pressure relief valve having a spring biased ball has a slight risk that, after transition from the normally inactive state into an active state, the pressure relief valve does not automatically move back into the closed state after release of the pressure. The latter reliable re-closure effect can however be very reliably achieved by a fluid restrictor or an elastic member. Thus, a synergetic combination of at least two pressure reduction mechanisms can be such that in the event of an overpressure first the fluid restrictor or elastic member is activated, and only thereafter, i.e. when the pressure reduction effect is not yet sufficient and the overpressure exceeds a further threshold value, the pressure relief valve joins the pressure reduction procedure.

According to an exemplary embodiment of the invention, the pressure reduction mechanism comprises a side branch or side path branching off or bifurcated from a fluidic conduit between the fluidic interface and a modulator valve of the secondary stage sample separation device. The side branch may comprise at least two redundant pressure reduction members of the above and/or other types. In particular and highly preferred, the pressure reduction mechanism in the side branch may comprise a fluidic serial connection of a first pressure reduction member configured as elastic member and a second pressure reduction member (or member group) downstream (in a flow direction of the fluidic sample in the side path in the event of an overpressure) of the pressure reduction member and configured as a pressure relief valve coupled to a waste via a fluidic restrictor. Such a configuration does not disturb the processing of the fluidic sample in the two-dimensional separation system in the absence of an overpressure and adds no substantial dead volume.

According to an exemplary embodiment of the invention, the secondary stage sample separation device is further configured for separating at least a portion of the supplied fluidic sample independent of a flow rate of the fluidic sample supplied from the primary stage sample separation device at the fluidic interface.

According to an exemplary embodiment of the invention, a secondary stage sample separation apparatus is provided which is mobile. This means that the secondary stage sample separation apparatus can be flexibly moved by a user to any desired primary stage sample separation device (which can be usually operated as a standalone device for sample separation when being uncoupled from the secondary stage sample separation apparatus) to which the secondary sample separation device can be connected for temporarily establishing a multidimensional sample separation system. In this multidimensional sample separation system, the primary stage performs the first sample separation and the detachably fluidically connected secondary stage performs a further separation. By configuring the secondary stage sample separation device as a spatially mobile device, it can be transported by a user to any desired primary stage sample separation device.

In an embodiment, the secondary stage sample separation device comprises a flow rate adapter configured for performing an adaptation between a value of the actual flow rate of the fluidic sample supplied by the primary stage sample separation device and a value of a flow rate, in particular a smaller flow rate value, according to which the secondary stage sample separation device is configured to operate with. According to this preferred embodiment, a provision is taken at or next or close to the fluidic interface which adapts a configurable secondary stage flow rate to a given flow rate of a presently connected primary stage sample separation device. In other words, the secondary stage sample separation device may have the flexibility to adjust its own flow rate properties so as to be able to cooperate with the flow rate conditions of a presently connected primary stage sample separation device. Such a flow rate adaptation is highly advantageous, since a completely independent operation of the secondary stage sample separation apparatus, regardless which flow rate is provided by the primary stage sample separation apparatus, could for instance result in an overflow of fluidic sample at the fluidic interface. By the provision of a flow rate adapter, the flexibly connected multiple stage sample separation system adapts itself in the secondary stage to obtain a synchronized flow rate. This may be accomplished without requiring any user action.

In an embodiment, the flow rate adapter is configured for performing the adaptation by splitting the fluid supplied to the secondary stage sample separation device into a first portion (for instance directed into a first flow path) corresponding to the flow rate used in the secondary stage sample separation device and used for further separation of the fluidic sample, and into a second portion (for instance directed into another second flow path), in particular being drained to a waste conduit or a waste container or can be sent to an additional fluidic sample detector or fraction collection device. In this embodiment, a flow rate provided by the primary stage which is too high for the secondary stage is conformed to the requirements of the secondary stage downstream of the fluidic interface by splitting the flow into a use path and into a waste path, or into two use paths in case where an additional detector is used. In the first use path with the desired flow rate of the secondary stage sample separation device, the corresponding portion of the fluidic sample can then be made subject to a further separation. The fluid in the waste path (or the second use path) can be guided to a waste container or can be stored temporarily for further processing or documentation purposes (or can be subjected to further detection).

In an embodiment, the flow rate adapter is configured for performing the adaptation by buffering consecutive portions of the fluidic sample supplied by the primary stage sample separation device into a plurality of buffer volumes, in particular sample loops, and for consecutively forwarding the buffered portions of the fluidic sample in the various buffer volumes for the further separation. In such an embodiment, a flow rate of the primary stage exceeding a desired flow rate for the secondary stage can be adjusted or adapted to one another by temporarily parking fluid packets provided by the primary stage in dedicated buffer volumes. Each of the buffer volumes may hence temporarily store a dedicated fluid packet coming from the primary stage.

For instance, these buffer volumes may be configured as sample loops provided between different fluidic ports of a fluidic valve. In the context of this application, the term "fluidic valve" may particularly denote a fluidic component which has fluidic interfaces, wherein upon switching the fluidic valve selective ones of the fluidic interfaces may be selectively coupled to one another so as to allow fluid to flow along a corresponding fluidic path, or may be decoupled from one another, thereby disabling fluid communication. By switching the fluidic valve, the individual fluid packets in the buffer volumes may then be consecutively supplied for further separation to a sample separation unit of the secondary stage sample separation device. Thus, valve switching may be controlled in such a manner that a new fluid packet from one of the buffer volumes is only introduced into the separation flow path of the secondary stage sample separation device when the latter is again ready to receive such a new fluid packet. Hence, also by the buffering or temporary parking of individual fluid packets in one or more buffer volumes, the flow rate adaptation may be performed.

In an embodiment, the flow rate adapter is configured for performing the adaptation by defining (or assigning) a flow rate to one or a plurality of buffer volumes, in a particular way, so as to buffer or park (for instance temporarily store in a respective one of the buffer volumes) a specific representative portion of the fluidic sample relating to a region of interest of a separation result (such as a separation spectrum, in particular a chromatogram in case of a chromatographic separation) for consecutively forwarding this buffered portion as the fluidic sample for the further separation.

In an embodiment, the flow rate adapter is configured for performing the adaptation by guiding the fluidic sample provided by the primary stage sample separation device into a selected one of a plurality of (for instance alternatively selectable, in particular fluidically parallel) sample separation paths in the secondary stage sample separation device, wherein each of the sample separation paths may be operable in accordance with an assigned flow rate, so as to obtain a match between the flow rate value of the primary stage sample separation device with a corresponding flow rate value assigned to the selected one of the multiple sample separation paths. In such an embodiment, multiple parallel flow paths may be provided in the secondary stage sample separation device, each configured for processing fluid with a respective flow rate. Hence, a given flow rate of the fluid originating from the primary stage sample separation device may be detected, and the corresponding best suitable one of the flow paths in terms of flow rate may be selected so as to guide the fluid coming from the primary stage into the appropriate flow path of the secondary stage.

In an embodiment, when the flow rate assigned to the presently connected primary stage sample separation device is smaller than a flow rate value processible by the secondary stage sample separation device, a flow rate measurement unit of the secondary stage sample separation device may detect this fact and may temporarily interrupt the further separation until a sufficiently large new fluid packet has arrived from the primary stage sample separation device. Then, secondary separation may be continued.

In an embodiment, the flow rate adapter comprises a modulator valve and a flow rate measurement unit for measuring a flow rate in the secondary stage sample separation device, wherein the modulator valve is controlled to switch in accordance with a measured flow rate so as to consecutively forward a predefined amount of the fluidic sample for further separation with each switch. Such a modulator valve may be a fluidic valve formed of two valve bodies which are configured to be movable relative to one another. One of these two valve bodies may have ports to be connected to fluid conduits for a fluid connection with various fluidic members of the secondary stage sample separation device. The other valve body may comprise channels such as grooves, which can fluidically connect or disconnect the respective ports in different ways in different switching states. For instance, the valve body having ports may be a stator, whereas the other valve body having the channels may be a rotor. Switching of the valve may be performed under control of a control unit such as a microprocessor. Switching may be performed under consideration of a present flow rate measured by the flow rate measuring unit. Therefore, the supply of new fluid packets to be processed (such as to be further separated) can be synchronized in accordance with the present flow rate.

In an embodiment, the fluidic interface is configured for being fluidically coupled to a waste conduit of the primary stage sample separation device. In a conventional one-dimensional sample separation device, which the primary stage sample separation device can be, the separated fluid may be guided towards a waste container via a waste conduit. In order to extend such a standalone primary stage sample separation device to a multiple stage sample separation system by connecting the secondary stage sample separation device, the latter may have a provision at its fluidic interface which allows to guide the fluid outlet towards the waste conduit to a fluidic input (at the fluidic interface) of the secondary stage sample separation device. Hence, the primary stage sample separation device is a sample separation device which needs not be specifically configured for multidimensional sample separation, but which may also operate autonomously for one-dimensional sample separation.

In an embodiment, the fluidic interface is configured as a snap-fit connector, a fitting piece of a two-part fitting (for instance a male fitting piece cooperating with a female fitting piece of the primary stage, or vice versa), a lever-based connector, a bayonet connector or a screw connector. In one embodiment, the fluidic interface has only one mechanical connection provision of one of the mentioned type or of another type. In another embodiment, multiple of such connection provisions may be provided at the fluidic interface, so that a user can select any desired of these coupling provisions for establishing a mechanical and fluidic coupling with the primary stage sample separation device. This allows to extend the flexibility of a user for using different kinds of primary stage sample separation devices together with the secondary stage sample separation device.

In an embodiment, the secondary stage sample separation device comprises a cart (such as a carriage or a vehicle) by which the secondary stage sample separation device is movable by a user. By mounting the fluidic components of the secondary stage sample separation device on a cart, which may for instance have a support for carrying the components of the secondary stage sample separation device and wheels or e.g. an air cushion for moving the cart, the secondary stage sample separation device may be flexibly transported by a user to any desired primary stage sample separation device in a laboratory or in another environment. Therefore, multidimensional sample separation is possible by having a plurality of compact primary stage sample separation devices and only one secondary stage sample separation device (or a smaller number of secondary stage sample separation devices as compared to the number of primary stage sample separation devices) being capable of serving any of these primary stage sample separation devices for temporarily establishing a multiple stage sample separation system.

In an embodiment, the secondary stage sample separation device comprises a processor (as a control unit) configured for controlling the further sample separation by the secondary stage sample separation device without controlling operation of the sample separation by the primary stage sample separation device. According to this embodiment, in fundamental contrast to conventional two-dimensional sample separation systems, the primary stage sample separation device operates autonomously by its own control unit such as a processor. Additionally, a separate processor is provided in the secondary stage sample separation device, wherein the latter processor controls operation of the secondary stage sample separation device alone and may control additionally flow adaptation at the fluidic interface between the primary stage and the secondary stage. In one embodiment, the processor of the primary stage and the processor of the secondary stage operate completely independently, i.e. without communicating with one another and/or without synchronizing their operation. In this way, it is possible that no adaptation of a conventional primary stage sample separation device is necessary to extend it by use of the secondary stage sample separation device according to an exemplary embodiment of the invention to establish a non-permanent multidimensional sample separation system.

In an embodiment, the processor is configured for synchronizing the secondary stage sample separation device with the primary stage sample separation device based on a predefined reference peak resulting from the sample separation by the primary stage sample separation device. Although the two processors can operate independently from one another, a synchronization of the operation of the primary stage and the secondary stage can be performed in terms of timing by the processor of the secondary stage sample separation device alone. In order to obtain such a synchronization, which is advantageous to derive a meaningful two-dimensional detection result, a preknown reference peak may be taken as a basis for synchronization of the timing of the secondary stage sample separation.

In an embodiment, the secondary stage sample separation device is configured for receiving data indicative of the sample separation by the primary stage sample separation device and is configured for adapting the further sample separation by the secondary stage sample separation device in accordance with the received data. In such an embodiment, the secondary stage sample separation device may be coupled to the primary stage sample separation device in such a manner that a data transfer from the primary stage to the secondary stage is enabled. For instance, the secondary stage may then receive information with regard to flow rate, a chromatographic gradient, a chromatographic method in general, etc. so that the secondary stage sample separation device may then have a deeper basis of information for adapting its own configuration to the requirements and conditions given by the primary stage. For instance, such a data transfer may be performed via a for instance wireless or wired communication interface of the secondary stage sample separation device which can be connected to a data line of the primary stage to thereby receive this data.

In an embodiment, the secondary stage sample separation device comprises an interface detector at the fluidic interface configured for redetecting (i.e. detecting again) the fluidic sample separated by the primary stage sample separation device. This redetection may occur prior to the further separation of the fluidic sample by the secondary stage sample separation device. Thus, in addition to a detector of the primary stage sample separation device which detects the separated fractions of the fluidic sample separated in the primary stage, an additional interface detector may be foreseen for instance at or close to the fluidic interface of the secondary stage sample separation device. By detecting the result of the sample separation of the primary stage, the secondary stage may receive further information with regard to the operation of the primary stage which may allow for a more refined adaptation of the operation of the secondary stage to synchronize it with the primary stage.

In an embodiment, the secondary stage sample separation device comprises a modulator valve configured for dividing the fluidic sample supplied by the primary stage sample separation device into a plurality of consecutive fluid packets and for consecutively guiding individual of the fluid packets into an analytical path of the secondary stage sample separation device in which the fluid packets of the fluidic sample are to be further separated. By such a modulator valve, the flow originating from the primary stage may be separated into subsequent packets, wherein one packet after the other may be introduced into an analytical path of the secondary stage sample separation device. In this analytical path, a sample separation unit such as a chromatographic column may be provided which performs a separation of each of the fluid packets into sub-fractions. In other words, the primary stage may separate a fluidic sample into consecutive fractions each included in one or at least one of the fluid packets, and each fluid packet with one or more fractions may then be separated, under control of the modulator valve, into a plurality of sub-sections in the secondary stage.

In an embodiment, the analytical path comprises an analytical pump for pumping mobile phase to be mixed with the fluid packets and comprises a sample separation unit for further separating the fluidic sample in the mixture. Hence, the secondary stage sample separation can be a chromatographic separation in which an analytical pump pumps a mobile phase with a high pressure upon which mixing of this mobile phase with one of the fluid packets occurs and the transport of the respective fluid packet with one or more fractions of the fluidic sample to the secondary stage sample separation unit.

In an embodiment, the modulator valve comprises a plurality of buffer volumes, in particular sample loops, each for buffering a corresponding one of the fluid packets. Thus, parking loops as buffer volumes may form part of the modulator valve.

Additionally or alternatively, the secondary stage sample separation device may comprise a plurality of buffer volumes, in particular sample loops, each for buffering a corresponding one of the fluid packets, wherein the buffer volumes are provided separately from the modulator valve and are fluidically coupled to the modulator valve. In this embodiment, the fluid packets do not form part of or are not directly connected to the modulator valve, but are arranged separately from it.

In an embodiment, the primary and/or the secondary stage sample separation device is configured as a chromatography sample separation device (in particular a liquid chromatography sample separation device, a gas chromatography sample separation device or a supercritical fluid chromatography sample separation device) or an electrophoresis sample separation device (in particular a capillary electrophoresis sample separation device). However, alternative separating technologies may be applied as well. When the secondary stage sample separation device is configured for liquid chromatography, it can be combined with a primary stage liquid chromatography device to a two-dimensional liquid chromatography apparatus (2D-LC). However, also other combinations of the sample separation techniques are possible, for instance involving electrophoresis sample separation. Advantageously, the primary stage separation and the secondary stage separation are at least partially orthogonal, i.e. separate the fluidic sample or a fraction thereof in accordance with a different separation criterion or based on a different extent of the same criterion.

In an embodiment, the sample separation system further comprises at least one further primary stage sample separation device configured for being alternatively fluidically coupleable to the secondary stage sample separation device via the fluidic interface. Therefore, multiple primary stage sample separation devices may be alternatively served by one and the same secondary stage sample separation apparatus to temporarily establish any two- or multidimensional sample separation system in a user-defined manner.

In an embodiment, the primary stage sample separation device alone is already itself a multiple stage sample separation device (for instance a two dimensional sample separation device, such as a 2D-LC). According to this embodiment, it is not only possible to form a two-dimensional sample separation system by combining a primary stage sample separation device with a secondary stage sample separation device, in contrast to this it is possible to provide a three-, four-, or five-dimensional sample separation system, or even a sample separation system with a still higher dimension.

In an embodiment, any of the primary and secondary stage sample separation devices may comprise a detector for detecting components of the separated fluidic sample. Such a detector for detecting the individual fractions and sub-fractions may be arranged downstream of the respective separating unit. Such a detector may operate on the basis of an electromagnetic radiation detection principle. For example, an electromagnetic radiation source may be provided which irradiates the sample passing through a flow cell with primary electromagnetic radiation (such as optical light or ultraviolet light). In response to this irradiation with primary electromagnetic radiation, there will be an interaction of this electromagnetic radiation with the fluidic sample so that this interaction can be detected based on variations in properties of the primary radiation (such as intensity, frequency, spectral distribution, propagation direction, vector of polarization or alike) or based on eventually emerging resulting secondary electromagnetic radiation, the said interaction being indicative of the concentration and/or kind of sample components contained in the fluidic fractions.

In an embodiment, any of the primary and secondary stage sample separation devices may comprise a sample injector for introduction of the fluidic sample into the separation system upstream of the respective separation unit. In such a sample injector of the primary stage, an injection needle may intake a metered amount of fluidic sample into a connected loop. After driving and inserting such an injection needle in a corresponding seat and upon switching a fluid injection valve, the fluidic sample may be injected into the path between a fluid drive and a separating unit. Upon such a switching operation, a mobile phase transported by the fluid drive and constituted by a solvent composition transports the sample to the separation unit and may get partially mixed with the fluidic sample. The secondary stage sample separation device may also be free of a sample injector.

In an embodiment, the primary stage separation unit and the secondary stage separation unit are configured so as to execute the respective sample separation in accordance with different separation criteria, particularly in accordance with at least partially orthogonal separation criteria. In this context, the term "orthogonal" may particularly denote the low degree or even lack of correlation between the retention parameters in the first and the second dimension in general or at least for the expected sample components.

In one embodiment, the entire fluidic sample supplied from the primary stage is further separated in the secondary stage. In another embodiment, only a part of the fluidic sample supplied from the primary stage is further separated in the secondary stage. Hence, the secondary stage may be operated in a comprehensive mode or in a heart-cut mode.

The separation unit of any of the stages may be filled with a separating material. Such a separating material which may also be denoted as a stationary phase may be any material which allows an different degree of interaction with sample components so as to be capable of separating different components of such a sample. The separating material may be a liquid chromatography column filling material or packing material comprising at least one of the group consisting of polystyrene, zeolite, polyvinylalcohol, polytetrafluorethylene, glass, polymeric powder, carbon, graphite, alumina, zirkonia, silicon dioxide, and silica gel, or any of above with chemically modified (coated, capped etc) surface. However, any packing material can be used which has material properties allowing a sample passing through this material to be separated into different components, for instance due to different degrees of interactions or affinities between the packing material and fractions of the analyte.

At least a part of any of the separation units may be fluid chambers filled with a separating material, wherein the separating material may comprise beads having a size in the range of essentially 0.1 µm to essentially 50 µm. Thus, these beads may be small particles which may be filled inside the separation section of the fluidic device. The beads may have pores having a size in the range of essentially 0.005 µm to essentially 0.2 µm. The fluidic sample may enter the pores, wherein an interaction may occur between the fluidic sample and the inner surface of the pores.

Any of the sample separation units may be a chromatographic column for separating components of the fluidic sample. Therefore, exemplary embodiments may be particularly implemented in the context of a liquid chromatography apparatus.

The sample separation system may be, in any of its stages, configured to conduct mobile phase through the system by means of a high pressure, particularly of at least 400 bar, more particularly of at least 1000 bar.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.
Figure 1 illustrates a two-dimensional sample separation system according to an exemplary embodiment of the invention constituted by a static primary stage sample separation device and a mobile secondary stage sample separation device flexibly and detachably connected to one another mechanically and fluidically at a waste conduit of the primary stage sample separation device via a fluidic interface, and configured for conforming the flow rates between the two stages at the fluidic interface in a self-sufficient way and without the necessity of involving a user.
Figure 2 illustrates a three-dimensional view of a mobile secondary stage sample separation device mounted on a cart according to an exemplary embodiment of the invention.
Figure 3 illustrates a detailed construction of a secondary stage sample separation device according to an exemplary embodiment of the invention.
Figure 4 illustrates a one dimensional separation result (in particular a chromatogram) of a primary stage sample separation device presently operating as a standalone device.
Figure 5 illustrates a two-dimensional separation result (in particular a chromatogram) of a sample separation system according to an exemplary embodiment of the invention constituted by the primary stage sample separation device of Figure 4 and a secondary stage sample separation device according to an exemplary embodiment of the invention detachably connected to the primary stage sample separation device.
Figure 6 illustrates a two-dimensional sample separation system according to an exemplary embodiment of the invention constituted by a primary stage sample separation device and a secondary stage sample separation device flexibly and detachably connected to the primary stage sample separation device via a detachable fluidic interface.
Figure 7 shows the sample separation system of Figure 6 in another switching state of a modulator valve thereof.
Figure 8 shows a portion of a secondary state sample separation device according to an exemplary embodiment in which a modulator valve is in fluid connection with a buffer valve in fluid connection with a plurality of buffer volumes in each of which a respective fluid packet coming from a primary stage sample separation device can be buffered.
Figure 9 shows a portion of a secondary stage sample separation device according to an exemplary embodiment in which a modulator valve cooperates with two buffer valves each cooperating with a plurality of buffer volumes for temporarily storing a respective fluid packet.
Figure 10 shows a pump of a secondary stage sample separation device according to an exemplary embodiment which allows to define and adapt a flow rate value of fluid flowing through the secondary stage sample separation device.
Figure 11 to Figure 14 illustrate parts of two-dimensional sample separation systems according to exemplary embodiments of the invention and having different embodiments of pressure reduction mechanisms.

The illustration in the drawing is schematic.

Before, referring to the drawings, exemplary embodiments will be described in further detail, some basic considerations will be summarized based on which exemplary embodiments of the invention have been developed.

According to an exemplary embodiment of the invention, a two-dimensional liquid chromatography system (2D-LC) with suppression of a back pressure pulse in the first dimension is provided.

In 2D-LC, the effluate of the first dimension separation is portion-wise introduced into the second dimension by a modulation unit, typically a modulator valve (also denoted as injector valve), which directs the effluate flow into a modulation loop (also denoted as buffer volume), typically by alternatingly switching between two or more modulation loops (which may also be denoted as buffer volumes). Such flow redirection operations can be accompanied by a temporary flow path interruption. The flow rate in the first dimension is typically low and the system elasticity is high, thus it may be believed that the pressure alteration during a very short flow interruption will not be significant. This is in particular true for the pump outlet pressure on the first-dimension pump, which alters insignificantly. However, the post-column pressure alters strongly, reaching nearly the column inlet pressure within several milliseconds due to extreme system rigidity flow downstream of the column. In particular once a detector is included into the first dimension set-up (which is frequently desired or necessary), these pressure pulses can be harmful for data acquisition, causing artifacts at the base line, or even cause hardware damage to the detection cell or the column.

According to an exemplary embodiment of the invention, a pressure reduction mechanism (in particular a pressure reduction device) for suppression of the said pressure spikes in order to avoid the described negative effects is provided. In order to suppress the pressure spikes using a pressure reduction mechanism, in particular the following embodiments are possible:

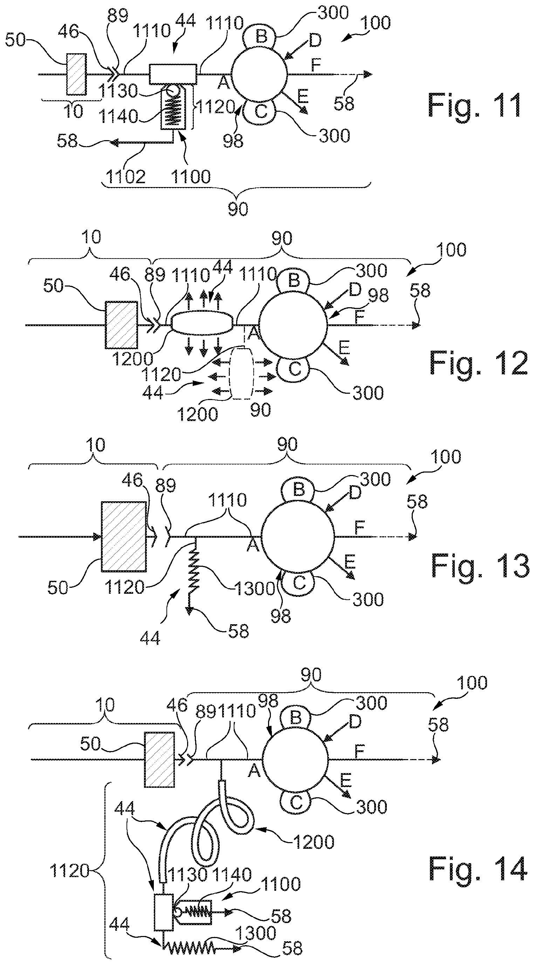

In a first embodiment (see for example Figure 11) it is possible to introduce a pressure relief valve in the fluid path close to the detector of the first dimension, preferably between the detector of the first dimension and the modulation valve of the second dimension, in order to limit the maximum pressure which can act on the detector cell, for instance by relieving the excessive fluid (i.e. fluidic sample which may include a mobile phase such as a solvent or a solvent composition) to a waste line.

In a second embodiment (see for example Figure 12) it is possible to introduce a flow-through elastic member of a limited volume into the flow path close to the detector of the first dimension, preferably between the detector and the modulation valve, such that the elasticity of the said elastic member can accommodate the excessive volume gathering during the flow blockage (interruption downstream), which otherwise would result in an intolerable pressure increase (typically a volume of 1 µl to 3 µl needs to be parked or buffered by a pressure increase of less than approximately 100 bars).

In a third embodiment (see for example Figure 13) it is possible to introduce a flow restriction (which may also be denoted as fluid restriction) leading to waste into a side branch of the flow path close to the detector of the first dimension, such that only a little portion of the effluate can escape during the loop filling when the flow path is open, but the excessive effluate can take the flow path to the waste during the flow path blockage, without building up pressure over a safety margin, for instance of 100 bar.

In a fourth embodiment it is possible to introduce an elastic member into a side branch (an example is shown with dotted lines in Figure 12 as well) of the flow path close to the detector of the first dimension, such that the elasticity of the said elastic member can accommodate the excessive volume gathering during the flow interruption. The elastic member may be an elastic reservoir but also a rigid reservoir of a volume, sufficient to accommodate the excessive fluid due to compressibility of the fluid within the reservoir.

In a fifth and particularly preferred embodiment (see for example Figure 14) it is possible to introduce an elastic member as in the fourth embodiment equipped with:
a. an additional pressure relief valve, and/or
b. an additional restriction leading the fluid from the side branch to waste, so that no delayed material exchange back from the elastic side branch into the main flow path can take place (delayed material exchange is for instance diffusion of the content of the side branch after the pressure pulse has passed), and/or
c. a check valve on the inlet terminus of the said side elastic branch especially for preventing backflow.

According to an exemplary embodiment of the invention, a second dimension sample separation device (or secondary stage sample separation device) with an assigned separation unit is provided which is configured to fit perfectly to any existing first dimension sample separation device (or primary stage sample separation device) on-the-fly.

The optimization of (U)HPLC methods for chromatographic resolution gains importance when samples become increasingly complex (i.e. having plenty of compounds). Yet frequently one would encounter evidence (such as a shoulder or tail on a chromatographic peak) or it is a fear that there might be a hidden component that co-elutes in parallel to a substance of interest. An important application example for such a scenario can be found in the pharmaceutical industry: The "impurity profiling" workflow seeks for impurities in the active pharmaceutical ingredient (API). Impurities have to be reported down to a level of 0.05% of the API. In this case it may be a huge effort to verify. Possibilities are the re-analysis of the sample using different HPLC column media or for example to use orthogonal separation techniques, like electrophoresis. It can be very helpful if a user has a two-dimensional liquid chromatography (2D-LC) system available. Still one would have to develop and optimize a complete 2D-LC method, dedicated for this actual application or a certain application class. The result can be a dramatic loss in performance and efficiency (increased effort and longer time-to-market) due to a potential loss in analysis speed and required optimization procedures. Especial in the initial learning phase, when a user is still doing method development, a sudden unexpected result may be disturbing (at least distracting). Slightest modifications may disrupt and the effect is gone. Even if a user switches from a one-dimensional separation device to a two-dimensional separation device by using the same type of column media, a user still faces the fact that the resolution may be different and the user may have lost the track.

In order to overcome the above-mentioned shortcomings, an exemplary embodiment of the invention provides a secondary stage sample separation device that can be easily transported to aid in making the second dimension separation independent of a first (one) dimension method. For instance, an existing 1D-LC setup (as primary stage sample separation device) can be simply extended on-the-fly with a second dimension (i.e. the secondary stage sample separation device) that can be used as extension-analyzer that can automatically resolve additional features.

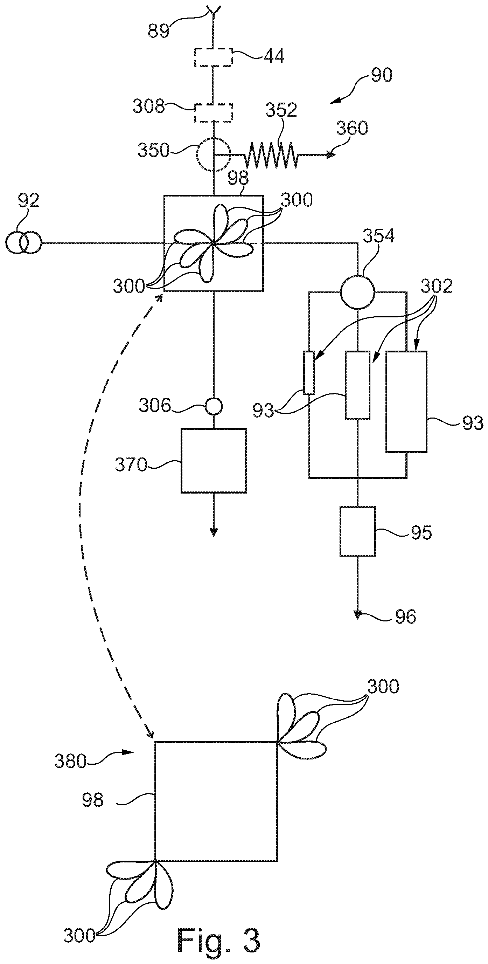

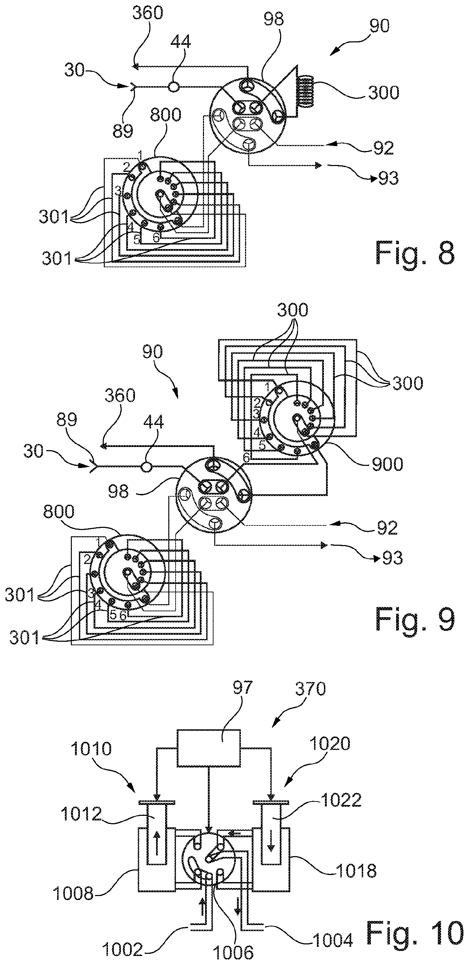

A secondary stage sample separation device according to an exemplary embodiment of the invention can include one of the following features:
- a pump operable to ensure a predefinable flow rate the second dimension (see Figure 10)
- a set of columns (preferably such that show as much as possible orthogonal separation behavior) and mobile phases for scouting (see Figure 3)
- several sample loops with varying volumes (see Figure 8 and Figure 9)
- capability of reading 1D-method or raw data from previous runs to align operation of the 2D extension
- lose trigger cable for start indication, or analog pressure synchronization
- inside T-piece with fluidic valve for flow calibration

According to an exemplary embodiment of the invention, a method of adding a second dimension separation (by providing a secondary stage sample separation device) to a running conventional system (i.e. the primary stage sample separation device) is provided, without a need to modify any hardware, software, firmware components or programmed methods of the existing system (i.e. of the primary stage sample separation device).

According to another exemplary embodiment of the invention, a second dimension subsystem (i.e. the secondary stage sample separation device) is provided, which can be attached to the outlet of an existing system (i.e. the primary stage sample separation device) to analyze the effluent in the second dimension. The subsystem can be compact, transportable, capable of being operated independently of the first dimension, whereas its operation may be synchronized (in particular as slave) to the first dimension at certain reference points. The subsystem may bear accessory means providing extended independence (for instance a flow splitter, an active flow splitter, a pump as shown in Figure 10 which is capable of defining a desired flow rate, an independent system controller, etc.) and extended flexibility (such as a variable modulation loop appliance, a column and mobile phase scouting hardware, etc.).

In an embodiment, when connected to the outlet of an existing 2D-LC setup (as primary stage sample separation device), then the above described cart (as secondary stage sample separation device) actually forms the third dimension.

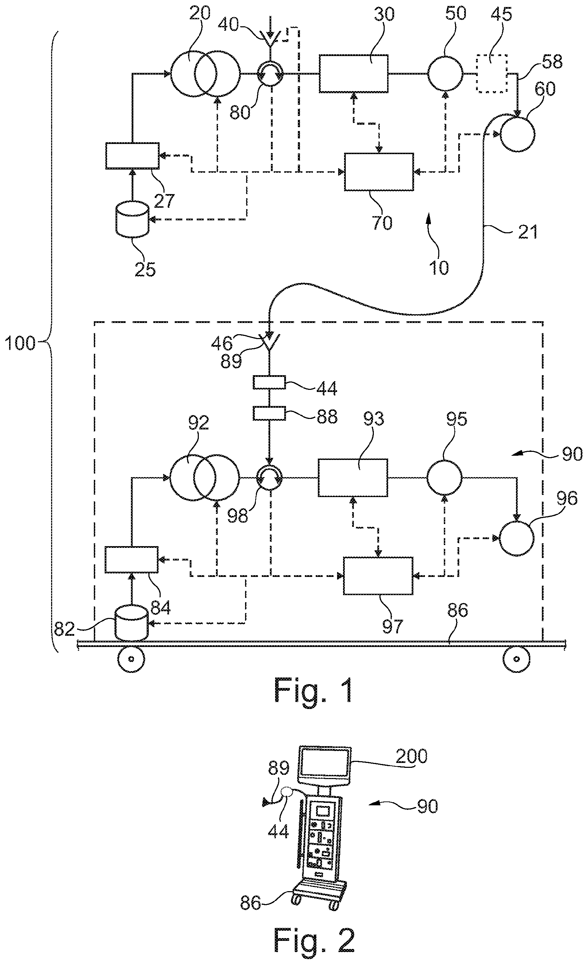

**Figure 1** illustrates a two-dimensional sample separation system 100 according to an exemplary embodiment of the invention.

The sample separation system 100 is constituted by a spatially static primary stage sample separation device 10 and a movable or mobile secondary stage sample separation device 90. They are flexibly and detachably connected to one another mechanically and fluidically via a waste conduit 58 of the primary stage sample separation device 10 and via a fluidic interface 89 of the secondary stage sample separation device 90. In the shown embodiment, the fluidic interface 89 can be a snap-fit connector. For accomplishing the fluidic and mechanical coupling of the primary stage sample separation device 10 and the secondary stage sample separation device 90 according to Figure 1, the secondary stage sample separation device 90 can be moved towards the static primary sample separation device 10 and can be fluidically coupled in a detachable manner to the primary stage sample separation device 10 via the fluidic interface 89. The secondary stage sample separation device 90 may be movable by a user by driving the secondary sample separation device 90 using a cart 86. The cart 86 has a support and has wheels, wherein the various fluidic members of the secondary stage sample separation device 90 are mounted on the support and can be moved making use of the wheels of the cart 86. Thus, by coupling the secondary stage sample separation device 90 to the primary stage sample separation device 10, it is possible to temporarily establish two-dimensional sample separation system 100. Since the fluidic interface 89 can be a multipurpose fluidic interface, flexible combination of the secondary stage sample separation device 90 with one of different primary stage sample separation devices 10 is possible. The secondary stage sample separation device 90 is configured as to conform the flow rates between the two stages at the fluidic interface 89 in a self-sufficient way and without the necessity of involving a user.

The secondary stage sample separation device 90 is configured for further separating fractions of the fluidic sample into sub-fractions, which fractions are provided by the primary stage sample separation device 10 as a result of the initial separation of the fluidic sample. As will be described below in further detail, the sample separation system 100 is configured for carrying out two-dimensional liquid chromatography separation (2D-LC) of a fluidic sample.

As can be taken from Figure 1, a secondary stage pressure reduction mechanism 44 is provided in the secondary stage sample separation device 90 and is configured for reducing pressure at the fluidic interface 89 and upstream thereof (i.e. in the primary stage sample separation device 10) in the event of an overpressure. It is additionally or alternatively also possible to provide an optional primary stage pressure reduction mechanism 45 in the primary stage sample separation device 10 which is configured for reducing pressure in the primary stage sample separation device 10 in the event of an overpressure in the secondary stage sample separation device 90. Any of these pressure reduction mechanisms 44, 45 is capable of preventing an overpressure (which may be generated temporarily during switching of the secondary stage injector valve or modulator valve 98) from impacting the detector 50 of the primary stage sample separation device 10. Any of these pressure reduction mechanisms 44, 45 may be configured for instance in accordance with any of the embodiments of Figure 11 to Figure 14.

Next, the operation of the primary stage sample separation device 10 will be explained. This operation can be a standalone operation, i.e. the primary stage sample separation device 10 may be operated completely independent of the optionally and flexibly connectable secondary stage sample separation device 90 when a single stage separation is sufficient. In such a standalone one-dimensional separation mode, waste conduit 58 is guided into a waste container 60 in which the separated fluidic sample is accumulated. In an extended two-dimensional separation mode as shown in Figure 1, the waste conduit 58 is mechanically and fluidically connected to the fluidic interface 89, as indicated schematically by reference numeral 21 in Figure 1.

When taken alone, the primary stage sample separation device 10 operates as a one dimensional liquid separation system, as follows: A first pump 20 receives a mobile phase as a whole or as individual components that get mixed together by the first pump 20, from a first solvent supply 25, typically via a first degasser 27, which degases and thus reduces the amount of dissolved gases in the mobile phase. The first pump 20 - as a mobile phase drive - drives the mobile phase through a first separating unit 30 (such as a chromatographic column) comprising a stationary phase. A first sampling unit 40 can be provided between the first pump 20 and the first separating unit 30 in order to subject or add (often referred to as sample introduction) a sample fluid (also denoted as fluidic sample) into the mobile phase. Switching of a fluidic valve 80 actually triggers the injection. The stationary phase of the first separating unit 30 is configured for separating compounds of the sample liquid. After detection of the separated fluidic sample by a first detector 50, the separated fluidic sample is further transported via waste conduit 58 and is then accumulated in the waste container 60.

A data processing unit 70, which can be a conventional PC or workstation, might be coupled (as indicated by the dotted arrows) to one or more of the devices in the primary stage sample separation device 10 in order to receive information and/or control operation. For example, the data processing unit 70 might control operation of the first pump 20 (for instance setting control parameters) and receive therefrom information regarding the actual working conditions (such as output pressure, flow rate, etc.). The data processing unit 70 might also control operation of the first solvent supply 25 (for instance setting the solvent/s or solvent mixture to be supplied) and/or the first degasser 27 (for instance setting control parameters such as vacuum level) and might receive therefrom information regarding the actual working conditions (such as solvent composition supplied over time, flow rate, vacuum level, etc.). The data processing unit 70 might further control operation of the first sampling unit 40 (for instance controlling sample injection or synchronization sample injection with operating conditions of the first pump 20). The first separating unit 30 might also be controlled by the data processing unit 70 (for instance selecting a specific flow path or column, setting operation temperature, etc.), and send - in return - information (for instance operating conditions) to the data processing unit 70. Accordingly, the first detector 50 might be controlled by the data processing unit 70 (for instance with respect to spectral or wavelength settings, setting time constants, start/stop data acquisition), and send information (for instance about the detected sample compounds) to the data processing unit 70.

In contrast to the primary stage sample separation device 10, the secondary stage sample separation device 90 is not intended to be operated as a standalone device. In contrast to this, operation of the secondary stage sample separation device 90 in terms of sample separation requires mechanical and fluidic connection between the primary stage sample separation device 10 and the secondary sample separation device 90 via the fluidic interface 89, as shown in Figure 1. When a user wants to extend the one-dimensional separation capability of the primary stage sample separation device 10, the user may detachably fluidically connect the fluidic interface 89 of the secondary stage sample separation device 90 to waste line 58 of the primary stage sample separation device 10.

In the coupled state as shown in Figure 1, fluidic sample separated by the primary stage sample separation device 10 into fractions is fluidically supplied to the secondary stage sample separation device 90 for further separation of the fractions into sub-fractions. Advantageously, as will be described below in further detail, the secondary stage sample separation device 90 is configured for further separating the supplied fluidic sample independent or irrespective of a flow rate value of the fluidic sample supplied from the primary stage sample separation device 10 at the fluidic interface 89. Hence, a flow rate adaptation between the given flow rate of the primary stage sample separation device 10 and the adjustable flow rate taken up in the secondary sample separation device 90 is possible by means of a flow rate adapter 88. The latter is configured for performing an adaptation between the flow rate of the fluidic sample supplied by the primary stage sample separation device 10 and a flow rate according to which the secondary stage sample separation device 90 is configured to operate with.

As can be taken from Figure 1, the fluid coming from the primary stage sample separation device 10, after adaptation of the flow rate of the two stages by the flow rate adapter 88, is injected via a modulator valve 98 into an analytic path of the secondary sample separation device 90. Mobile phase is provided by a second solvent supply 82. The provided mobile phase can be degassed in a second degasser 84 and can be pumped by a second pump 92 of the secondary stage. At the modulator valve 98, the mobile phase is mixed with a fluid packet originating from the primary stage sample separation device 10. This fluid packet which may include one or more fractions of the fluidic sample is then further separated by liquid chromatography in a second separation unit 93, in particular a further chromatographic column, into sub-fractions. The separated sub-fractions, which can be desorbed from the second separation unit 93 by applying a mobile phase gradient can be detected in a second detector 95. If not a distructive detector (such as a mass spectrometer), the separated sub-fractions can be guided towards a second waste container 96 (alternatively a fraction collector). A second processor 97 of the secondary stage sample separation device 90 is configured for controlling only the secondary separation and does not cooperate with processor 70 of the primary stage sample separation device 10, so that both stages are controlled by a separate independently operating processor 70, 97 or processing routine.

**Figure 2** illustrates a three-dimensional view of a mobile secondary stage sample separation device 90 mounted on a cart 86 according to an exemplary embodiment of the invention. The individual fluidic components of the secondary stage sample separation device 90 are mounted on the card 86 as modules. A fluidic and mechanical connection to a primary stage sample separation device 10 (not shown) can be accomplished by a user by simply plugging fluidic interface 89 together with a free or open end of a waste conduit 58. A user interface 200, shown as a display, is provided as well which allows unidirectional or bidirectional communication between a user and the secondary stage sample separation device 90.

**Figure 3** shows a detailed view of a secondary stage sample separation device 90 according to an exemplary embodiment of the invention.

Downstream of the fluidic interface 89, the fluidic sample arriving from the primary stage sample separation device 10 (not shown in Figure 3) can be redetected by an interface detector 308. More specifically, interface detector 308 is configured for redetecting the fluidic sample separated by the primary stage sample separation device 10 prior to the further separation of the fluidic sample by the secondary stage sample separation device 90. Knowledge of the way as to how fractions of the fluidic sample have been separated by the primary stage sample separation device 10 and as to how they arrive at the fluidic interface 89 allows the secondary stage sample separation device 90 to adjust its own operation parameters for the secondary separation synchronized to the primary separation. The interface detector 308 may in particular detect a reference peak expected from the primary stage so as to adapt timing of the secondary stage to a given separation timing of the primary stage.

At a fluidic T-piece 350 downstream of the interface detector 308, a part of the fluidic sample may be guided via a fluid restrictor 352 towards a waste 360, whereas another part (i.e. the rest) of the fluidic sample is guided towards a modulator valve 98. By configuring the fluid restrictor 352 to have an adjustable fluidic impedance or resistance, the individual amounts propagating towards waste 360 and towards modulator valve 98 can be adjusted in terms of flow rate adjustment between the two stages.

The modulator valve 98 is switchable under control of the control unit 97 (not shown in Figure 3) so that, consecutively, individual fluid packets of the fluidic sample arriving from the primary stage and passing the fluidic T-piece 350 towards the modulator valve 98 can be injected into an analytical path of the secondary stage.

However, the analytical path is, according to Figure 3, selectable. As can be taken from Figure 3, one of three partially parallel flow paths 302 between the analytical pump 92 and one of a plurality of separation units 93 (for instance chromatographic columns of different dimensions and/or different separation characteristics) can be selected by correspondingly switching a selection valve 354 (which can be switched under control of the control unit 97). Thus, in dependence of the flow rate of the primary stage and/or in dependence or a required/selected separation characteristic, an appropriate one of the individual flow paths 302, each having a different dimension and therefore supporting a respective other flow rate, can be selected.

Furthermore, adaptation of the flow rate between the two stages is also possible by switching the modulator valve 98 in such a manner that individual fluid packets originating from the primary stage can be buffered temporarily in one of a plurality of buffer volumes 300, configured as separate sample loops. Moreover, a flow rate measurement unit 306 may be provided for measuring a flow rate in the secondary stage sample separation device 90. The modulator valve 98 may be controlled to switch in accordance with a measured flow rate so as to consecutively forward a predefined amount of the fluidic sample for further separation with each switch. Hence, the flow rate measurement unit 306 may measure the flow rate and may supply measurement data to the processor 97 so as to control the flow rate adaptation. Thus, the fluid packets may be supplied packet-wise for further separation by firstly buffering them in one of the buffer volumes 300, and by an appropriately timed switching of the modulator valve 98 so that a new fluidic packet is only injected into one of the analytical paths when appropriate.

As can be taken from a detail 380 in Figure 3, as an alternative to the integration of the individual buffer volumes 300 or sample loops in the modulator valve 98, a plurality of buffer volumes 300 may be also provided separately from the modulator valve 98. It is possible to dimension the accommodation volumes of the buffer volumes 300 identical. It is however also possible to dimension them differently so as to obtain sample loops of varying accommodation volume.

It can be furthermore taken from Figure 3 that a further possibility of adapting the flow rates of the two stages to one another is the provision of a schematically illustrated flow rate adaptation pump 370 (for instance of the type shown in Figure 10) which is operable so that only a desired flow rate is allowed to flow through the fluidic interface of the secondary stage.

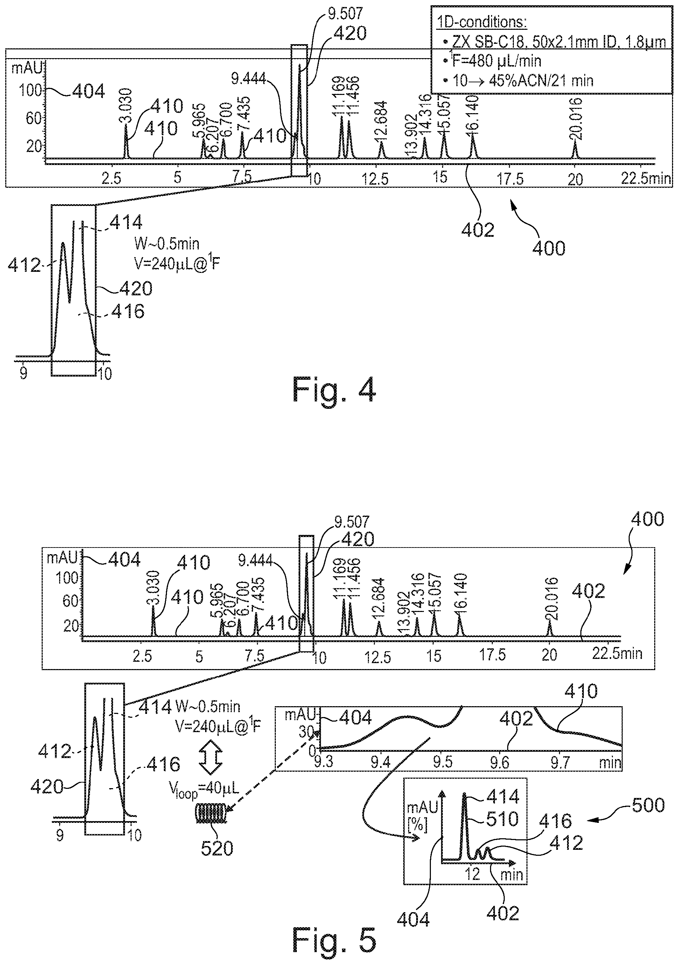

**Figure 4** illustrates a one dimensional detection chromatogram 410 of a primary stage sample separation device 10 presently operating as a standalone device. **Figure 5****,** in addition to one dimensional chromatograms 410 and zooms thereof, illustrates a two-dimensional detection chromatogram 510 of a sample separation system 100 according to an exemplary embodiment of the invention constituted by the primary stage sample separation device 10 according to Figure 4 and a secondary stage sample separation device 90 according to an exemplary embodiment of the invention detachably connected to the primary stage sample separation device 10. More specifically, Figure 4 illustrates a diagram 400 having an abscissa 402 along which a retention time (or a retention volume) is plotted, and having an ordinate 404, along which a detection signal of a chromatographic experiment is plotted. It can be seen that a peak region 420 indeed has several sub-peaks 412, 414, 416, which can be distinguished by a secondary stage separation as shown in Figure 5 , which illustrates the result of the second dimension analysis, compare additional diagram 500.

Figure 4 and Figure 5 in particular illustrate the independence of the second dimension when using a 2D-cart architecture by adding a secondary stage sample separation device 90 to a primary stage sample separation device 10. Figure 4 illustrates a one dimensional chromatogram 410, specifically the zoom or peak portion 420, (Width, W = 0.5 min) showing the co-eluting peaks 412, 414, 416. As can be taken from Figure 5, the one dimensional setup is extended using a 2D-cart including adaptation pump 370 which defines a flow rate in a flow path, whose flow is set to a predefinable value (for instance 50 µL/min) that allows to fill a split portion of the peak portion 420 into a 40µL loop 520 in a quantitative manner without having to lower the flow rate in the first dimension. The flow rate of the first dimension continues to be 480 µL/min, which makes the volume of the peak region 420 about 240 µL.

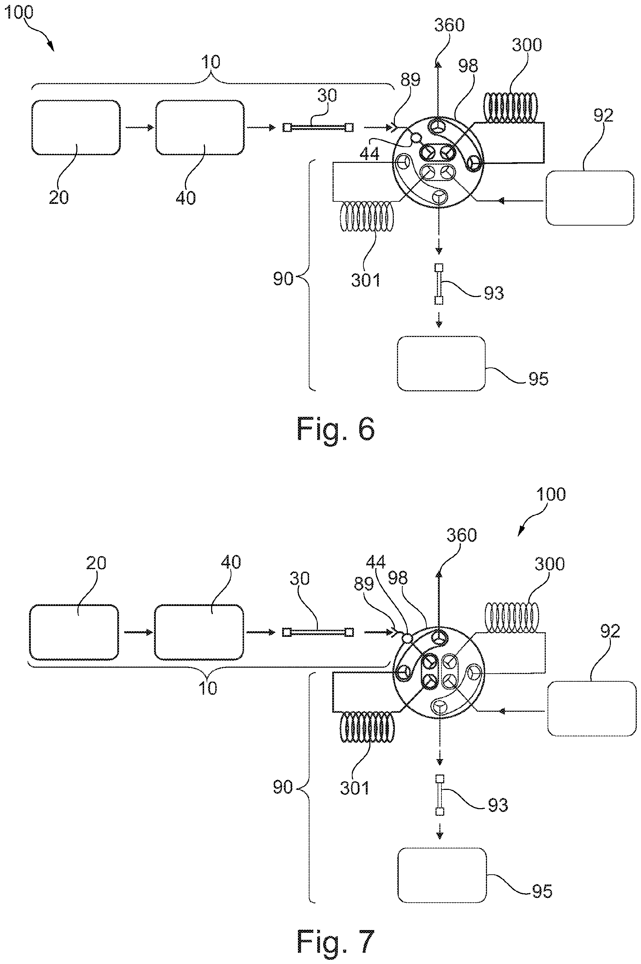

**Figure 6** illustrates a two-dimensional sample separation system 100 according to an exemplary embodiment of the invention constituted by a primary stage sample separation device 10 and a secondary stage sample separation device 90 flexibly and detachably connected to the primary stage sample separation device 10 via a detachable fluidic interface 89. **Figure 7** shows the sample separation system 10 of Figure 6 in another switching state of a modulator valve 98 thereof.

As can be taken from Figure 6 and Figure 7, the modulator valve 98 has in this case two buffer volumes 300, 301 connected to various ports thereof so that fluid packets originating from the primary stage can be buffered in the buffer volumes 300, 301 before being supplied to the analytical path of the secondary stage, i.e. between second pump 92 and second separation unit 93. In the switching state of the modulator valve 98 according to Figure 6, the buffer volume 300 on the upper right-hand side is presently filled with new fluidic sample flowing from the first dimension into the second dimension, whereas the other buffer volume 301 on the lower left-hand side is presently in the fluidic path between the second pump 92 and the second separation unit 93, i.e. fluidic sample previously stored in this other buffer volume 301 is presently further separated. In the switching state of the modulator valve 98 according to Figure 7, the buffer volume 301 on the lower left-hand side is presently filled with new fluidic sample flowing from the first dimension into the second dimension, whereas the buffer volume 300 on the upper right-hand side is presently in the fluidic path between the second pump 92 and the second separation unit 93, i.e. fluidic sample previously stored in this buffer volume 300 is presently further separated.

**Figure 8** shows a portion of a secondary stage sample separation device 90 according to an exemplary embodiment in which modulator valve 98 is in fluid connection with a buffer valve 800 in fluid connection with a plurality of buffer volumes 301 in each of which a respective fluid packet coming from a primary stage sample separation device 10 can be buffered. Figure 8 shows the modulator valve 98 with buffer valve 800 which can serve in this case six buffer volumes 301 (see numbers 1 to 6 at the buffer valve 800). The switching state according to Figure 8 corresponds to the switching state according to Figure 6. The modulator valve 98 further cooperates with the buffer valve 800, which is in direct fluid connection with the individual buffer volumes 301 so that the fluid packets can be temporarily stored in a respectively free one of the buffer volumes 301 and can be subsequently switched individually and one after the other into the analytical path of the secondary stage.

**Figure 9** shows a portion of a secondary stage sample separation device 90 according to an exemplary embodiment in which modulator valve 98 cooperates with two buffer valves 800, 900 each cooperating with a plurality of buffer volumes 300, 301 for temporarily storing a respective fluid packet. Figure 9 hence shows an alternative configuration in which one modulator valve 98 cooperates with two packet parking valves 800, 900. Each of the packet parking valves 800, 900 serves six buffer volumes 300, 301 (see numbers 1 to 6 at the buffer valves 800, 900). Hence, any desired number of buffer volumes 300, 301 can be implemented following the principle of Figure 8 and Figure 9, so that basically any adaptation of a larger flow rate of the primary stage as compared to a smaller flow rate of the secondary stage is possible.

**Figure 10** shows a flow rate adaptation pump 370 of a secondary stage sample separation device 90 according to an exemplary embodiment which allows to adapt to a flow rate value of fluid flowing through the fluidic interface 89 of the secondary stage sample separation device 90 by defining the flow rate passing through T-piece 350 towards modulator valve 98. Details of a possible construction of the flow rate adaptation pump 370 are disclosed in GB 2,490,673, which is hereby incorporated by reference in its entirety (see in particular Figure 5A to Figure 5F thereof).

The flow rate adaptation pump 370 is operable so that only a desired flow rate is allowed to flow through the fluidic interface 89 of the secondary stage. In particular, a flow rate between a fluid inlet 1002 and a fluid outlet 1004 can be adjusted by the flow rate adaptation pump 370 under control of the control unit 97. The fluid with the adjustable flow rate flows via the fluid inlet 1002 through a flow rate adaptation valve 1006 and from there into a working chamber 1008 of a first piston pump 1010. A first piston 1012 reciprocates within the working chamber 1008 under control of the control unit 97. In the present scenario, the fluid flows into the working chamber 1008 with a flow rate which is defined by the motion pattern of the first piston 1012. Thus, the velocity according to which the first piston 1012 moves within the first working chamber 1008 under control of the control unit 97 defines the allowed flow rate at this moment. When the first piston 1012 has moved within the first working chamber 1008 up towards an end position in which it is not capable of receiving any further fluid, the flow rate adaptation valve 1006 is switched by the control unit 97 so that the first working chamber 1008 can be emptied towards the fluid outlet 1004 by an inverse motion of the first piston 1012. New fluid from the fluid inlet 1002 can now be accommodated in a second working chamber 1018 of a second piston pump 1020. In the period in which the fluid has been received in the first working chamber 1008, other fluid which has been previously filled into the second working chamber 1018 of the second piston pump 1020 has been guided towards the fluid outlet 1004 by a controlled motion of a second piston 1022. During the corresponding motion of the second piston 1022, the second working chamber 1018 has been emptied. This procedure can be repeated continuously. Thus, with a coordinated switching of the flow rate adaptation valve 1006 and a corresponding control of the movement of the pistons 1012, 1022, all under control of the control unit 97, the flow rate of the fluid flowing between the fluid inlet 1002 and the fluid outlet 1004 can be precisely defined.

**Figure 11** illustrates a portion of a two-dimensional sample separation system 100 according to an exemplary embodiment of the invention and having a pressure reduction mechanism 44. The portion shown in Figure 11 corresponds to an interface section between a primary stage sample separation device 10 and a secondary stage sample separation device 90, as shown in Figure 1.

The secondary stage sample separation device 90 is configured for separating a fluidic sample and comprises the fluidic interface 89 configured for forming a detachable fluidic coupling between the primary stage sample separation device 10 and the secondary stage sample separation device 90 so that the fluidic sample separated by the primary stage sample separation device 10 and detected by detector 50 of the first stage is fluidically supplied to the secondary stage sample separation device 90 via the fluidic interface 89 for further separation. Pressure reduction mechanism 44 is configured for reducing pressure at the fluidic interface 89 in the event of an overpressure in the secondary stage sample separation 90. The pressure reduction mechanism 44 is configured for negatively preventing the overpressure from impacting the primary stage sample separation device 10, in particular the detector 50. The pressure reduction mechanism 44 is in particular configured for reducing pressure at the fluidic interface 89 in the event of an overpressure generated by a switching operation of modulator valve 98 of the secondary stage sample separation device 90. An overpressure event is generated by a temporary incapability or reduced capability of the secondary stage sample separation device 90 to accept and further process fluidic sample material from the primary stage sample separation device 10. The pressure reduction mechanism 44 can accommodate or accept fluidic sample material selectively in the event of a temporary incapability or reduced capability of the secondary stage sample separation device 90 to receive fluidic sample material from the primary stage sample separation device 10. The pressure reduction mechanism 44 protects primary stage sample separation device 10 from pumping fluidic sample material against a temporarily fluidically blocking secondary stage sample separation device 90 and offers an alternative flow channel for excessive pressure reduction. In Figure 11, the pressure reduction mechanism 44 is arranged downstream of the fluidic interface 89 and upstream of a modulator valve 98 of the secondary stage sample separation device 90.

In the embodiment of Figure 11, the pressure reduction mechanism 44 comprises a pressure relief valve 1100 arranged between the fluidic interface 89 and the modulator valve 98 of the secondary stage sample separation device 90. The pressure relief valve 1100 is arranged and configured to disable flow of fluidic sample apart from a fluidic path 1110 between the fluidic interface 89 and the modulator valve 98 in the absence of overpressure (or to enable flow of fluidic sample only between the fluidic interface 89 and the modulator valve 98 in the absence of overpressure), and to split off flow of fluidic sample through the pressure relief valve 1100 away from the fluidic path 1110 between the fluidic interface 89 and the modulator valve 98 in the event of an overpressure. The pressure relief valve 1100 is here embodied as a spring biased ball valve, wherein the ball is denoted with reference numeral 1130 and the biasing spring is denoted with reference numeral 1140.

Operation of the pressure reduction mechanism 44 is as follows:
When fluidic sample is supplied from the primary stage sample separation device 10 to the secondary stage sample separation device 90, consecutive fluid packets are processed by a corresponding switching sequence of the modulator valve 98. In a first operation mode, a fluid packet of the fluidic sample is delivered via a fluidic path A->B->F, while simultaneously a previously supplied fluid packet of the fluidic sample is forwarded via a fluidic path D->C->E (compare also Figure 6). Terminal A connects the modulator valve 98 to the fluidic sample delivered from the primary stage sample separation device 10. B relates to the upper one of the buffer volumes 300 according to Figure 11. C relates to the lower one of the buffer volumes 300 according to Figure 11. Terminal D is connected to a high pressure pump of the secondary stage sample separation device 90. Terminal E connects to a sample separation unit of the secondary stage sample separation device 90. Terminal F connects to waste 58. After switching the modulator valve 98 into a second operation mode (compare also Figure 7), a subsequent fluid packet of the fluidic sample is delivered via a fluidic path A->C->F, while simultaneously the previously supplied fluid packet of the fluidic sample is forwarded via a fluidic path D->B->E for further separation. During each switching procedure of the modulator valve 98, there is a certain time interval (for instance having a duration in a range between 50 ms and 700 ms) during which the secondary stage sample separation device 90 is incapable of accepting new fluidic sample from the primary stage sample separation device 10 (which continues to pump such new fluidic sample). This may result in an overpressure. The pressure relief valve 1100 then opens and splits off fluidic sample into a side path 1120 branching off from fluidic path 1110 and being connected to drain or waste 58. This again reduces the overpressure and prevents in particular the sensitive detector 50 of the primary stage sample separation device 10 from damage.

**Figure 12** illustrates a two-dimensional sample separation system 100 according to another exemplary embodiment of the invention and having a pressure reduction mechanism 44 as well.

The difference between the embodiment of Figure 11 and the embodiment of Figure 12 is that according to Figure 12 the pressure reduction mechanism 44 comprises an elastic member 1200 (rather than a pressure relief valve 1100) being elastically expandable in the event of an overpressure to thereby temporarily accommodate fluidic sample material for reducing pressure. The elastic member 1200 is configured as a flow-through member arranged in the fluidic conduit 1110 between the fluidic interface 89 and the modulator valve 98.

Additionally or alternatively to the arrangement of the elastic member 1200 as just described, and as indicated with dotted lines in Figure 12, the above-mentioned elastic member 1200 or an additional elastic member 1200 may be arranged in side path 1120 with regard to fluidic conduit 1110 between the fluidic interface 89 and the modulator valve 98 to split off fluidic sample into the side path 1120 through the elastic member 1200 away from the fluidic path 1110 between the fluidic interface 89 and the modulator valve 98 in the event of an overpressure.

**Figure 13** illustrates a two-dimensional sample separation system 100 according to another exemplary embodiment of the invention and having yet another pressure reduction mechanism 44.

The difference between the embodiment of Figure 11 and the embodiment of Figure 13 is that according to Figure 13 the pressure reduction mechanism 44 comprises a flow restrictor or fluid restrictor 1300 (rather than a pressure relief valve 1100) having a higher fluidic impedance than and being in fluid communication with the fluidic conduit 1110 between the fluidic interface 89 and the modulator valve 98. The fluid restrictor 1300 is arranged in side path 1120 which is branched off from the fluidic conduit 1110 between the fluidic interface 89 and the modulator valve 98 to thereby branch off fluidic sample material in the event of an overpressure. The fluid restrictor 1300 is connected to waste 58 so as to prevent any possibility of fluid blockade.

**Figure 14** illustrates a two-dimensional sample separation system 100 according to still another exemplary embodiment of the invention and having a combined pressure reduction mechanism 44. The embodiment of Figure 14 synergetically combines individual pressure reduction mechanisms 44 shown in Figure 11, Figure 12 and Figure 13.

According to Figure 14, the pressure reduction mechanism 44 comprises a pressure relief valve 1100 having the above mentioned features, an elastic member 1200 which is here configured as an elastic capillary portion within side path 1120, and a fluid restrictor 1300 having the above mentioned features. The pressure reduction mechanism 44 is implemented in or forming part of side path 1120 or side branch branching off from fluidic conduit 1110 between the fluidic interface 89 and the modulator valve 98. The side path 1120 hence comprises redundant pressure reduction members 1200, 1100, 1300. More specifically, the pressure reduction mechanism 44 in the side path 1120 or branch comprises a fluidic serial connection of a first pressure reduction stage embodied as the elastic member 1200 and a second pressure reduction stage downstream (in accordance with a fluid flow direction in the event of an overpressure) of the first pressure reduction stage and configured as a pressure relief valve 1100 coupled to waste 58 both directly at a first valve interface (i.e. adjacent biasing spring 1140) and additionally indirectly at another valve interface (i.e. adjacent ball 1130) via fluidic restrictor 1300.

In the event of an overpressure, the overpressure is firstly reduced by an expansion of the elastic member 1200 (and/or by compressing of the content therein). Fluidic sample flows through the expanding or inflating elastic member 1200, passes the pressure relief valve 1100 and flows into fluidic resistor 1300 towards waste 58. In the described operation mode, the pressure relief valve 1100 is still inactive. Only in an emergency scenario in which cooperation of elastic member 1200 and fluidic resistor 1300 is still incapable of reducing the overpressure to a sufficient extent, the pressure relief valve 1100 will be activated so as to direct fluidic sample through an additional flow path towards waste 58, similar as in Figure 11. Therefore, only in very rare cases, the pressure relief valve 1100 needs to become active. Thus, the pressure relief valve 1100 is usually not required to drive back into a normally closed state when overpressure has been reduced again. Such a drive back procedure may be less reliable than the deactivation of cooperating elastic member 1200 and fluidic resistor 1300. However, at the same time, the high overpressure reduction capability of the pressure relief valve 1100 may still be used in an emergency case. Even more preferably, the through flow architecture according to Figure 14 prevents any fluidic sample from accumulating in narrow sections of the side path 1120 so that an efficient protection against carryover is provided as well.

It should be noted that the term "comprising" does not exclude other elements or features and the "a" or "an" does not exclude a plurality. Also elements described in association with different embodiments may be combined. It should also be noted that reference signs in the claims shall not be construed as limiting the scope of the claims.

## Claims

1. A secondary stage sample separation device (90) for separating at least a portion of a fluidic sample, wherein the secondary stage sample separation device (90) comprises:
a fluidic interface (89) configured for forming a detachable, fluidic coupling between a primary stage sample separation device (10) and the secondary stage sample separation device (90) so that the fluidic sample separated by the primary stage sample separation device (10) is fluidically suppliable to the secondary stage sample separation device (90) via the fluidic interface (89) for further separation;
a pressure reduction mechanism (44) configured for reducing pressure at the fluidic interface (89) at least in the event of an overpressure or of an excessive pressure increase, wherein the pressure reduction mechanism (44) is arranged downstream of the fluidic interface (89) and upstream of a modulator valve (98) of the secondary stage sample separation device (90).

2. The secondary stage sample separation device (90) according to claim 1, wherein the pressure reduction mechanism (44) is configured for preventing the overpressure from impacting the fluidically coupled primary stage sample separation device (10), in particular a detector (50) of the primary stage sample separation device (10).

3. The secondary stage sample separation device (90) according to claim 1 or 2, wherein the pressure reduction mechanism (44) is configured for reducing pressure at the fluidic interface (89) in the event of an overpressure or of an excessive pressure increase at a modulator valve (98) of the secondary stage sample separation device (90), in particular in the event of an overpressure or of an excessive pressure increase generated by a switching operation of a modulator valve (98) of the secondary stage sample separation device (90).

4. The secondary stage sample separation device (90) according to any of claims 1 to 3, wherein the pressure reduction mechanism (44) is configured for reducing pressure at the fluidic interface (89) in the event of an overpressure or of an excessive pressure increase generated by a temporary at least partial incapability of the secondary stage sample separation device (90) to receive fluidic sample material from the primary stage sample separation device (10).

5. The secondary stage sample separation device (90) according to any of claims 1 to 4, wherein the pressure reduction mechanism (44) is configured for at least temporarily accommodating fluidic sample material in the event of a temporary at least partial incapability of the secondary stage sample separation device (90) to receive fluidic sample material from the primary stage sample separation device (10).

6. The secondary stage sample separation device (90) according to any of claims 1 to 5, wherein the pressure reduction mechanism (44) is configured for preventing the primary stage sample separation device (10) from pumping fluidic sample material against a fluidically blocking secondary stage sample separation device (90).

7. The secondary stage sample separation device (90) according to any of claims 1 to 6, wherein the pressure reduction mechanism (44) comprises a pressure relief valve (1100), in particular arranged between the fluidic interface (89) and a modulator valve (98) of the secondary stage sample separation device (90).

8. The secondary stage sample separation device (90) according to claim 7, wherein the pressure relief valve (1100) is arranged and configured:
to disable flow of fluidic sample apart from a fluidic path (1110) between the fluidic interface (89) and a modulator valve (98) of the secondary stage sample separation device (90) in the absence of overpressure; and
to split off fluidic sample into a side path (1120) through the pressure relief valve (1100) away from the fluidic path (1110) between the fluidic interface (89) and the modulator valve (98) in the event of an overpressure.

9. The secondary stage sample separation device (90) according to any of claims 1 to 8, wherein the pressure reduction mechanism (44) comprises an elastic member (1200) being elastically expandable by fluidic sample material in the event of an overpressure to thereby temporarily accommodate fluidic sample material for reducing pressure.

10. The secondary stage sample separation device (90) according to claim 9, wherein the elastic member (1200) is configured as a flow-through member arranged in a fluidic conduit (1110) between the fluidic interface (89) and a modulator valve (98) of the secondary stage sample separation device (90).

11. The secondary stage sample separation device (90) according to any of claims 1 to 9, wherein the pressure reduction mechanism (44) comprises a fluid restrictor (1300) having a higher fluidic impedance than and being in fluid communication with at least portions of a fluidic conduit (1110) between the fluidic interface (89) and a modulator valve (98) of the secondary stage sample separation device (90).

12. The secondary stage sample separation device (90) according to claim 9 or 10 or 11, wherein the elastic member (1200) or the fluid restrictor (1300) is arranged in a side path (1120) with regard to the fluidic conduit between the fluidic interface (89) and the modulator valve (98) of the secondary stage sample separation device (90) to split off fluidic sample into the side path (1120) through the fluid restrictor (1300) away from the fluidic path (1110) between the fluidic interface (89) and the modulator valve (98) in the event of an overpressure.

13. The secondary stage sample separation device (90) according to any of the claims 1 to 12, comprising a flow rate adapter (88, 352, 370, 98) configured for performing an adaptation between the flow rate of the fluidic sample supplied by the primary stage sample separation device (10) and a flow rate, in particular a smaller flow rate, according to which the secondary stage sample separation device (90) is configured to operate with, wherein the flow rate adapter (88, 352, 370, 98) is configured for performing the adaptation:
by splitting the fluidic sample supplied to the secondary stage sample separation device (90) into a first flow path corresponding to the flow rate acceptable by the secondary stage sample separation device (90) and used for further separation of at least a portion of the fluidic sample, and into a second flow, or
by buffering consecutive portions of the fluidic sample supplied by the primary stage sample separation device (10) into a plurality of buffer volumes (300, 301), in particular sample loops, and for consecutively forwarding the buffered portions of the fluidic sample in the various buffer volumes (300, 301) for the further separation, or
by defining a flow rate to one or a plurality of buffer volumes (300, 301), in a particular way, so as to park a specific representative portion of the fluidic sample relating to a region of interest (420) in a separation spectrum, in particular in a chromatogram, for consecutively forwarding this buffered portion as the fluidic sample for the further separation, or
by guiding at least a portion of the fluidic sample provided by the primary stage sample separation device (10) into a selected one of a plurality of sample separation paths (302) in the secondary stage sample separation device (90), each of the sample separation paths (302) being operable in accordance with an assigned flow rate, so as to obtain a best match between the flow rate of the primary stage sample separation device (10) with a corresponding flow rate assigned to the selected one of the multiple sample separation paths (302).

14. A sample separation system (100) for carrying out a multiple stage separation of a fluidic sample, wherein the sample separation system (100) comprises:
a primary stage sample separation device (10) for separating a fluidic sample;
a secondary stage sample separation device (90) according to any of claims 1 to 13 fluidically coupleable or coupled, in particular detachably fluidically coupleable, to the primary stage sample separation device (10) via the fluidic interface (89) and configured for separating at least a portion of the fluidic sample supplied and separated by the primary stage sample separation device (10).

15. A method of carrying out a multiple stage separation of a fluidic sample, wherein the method comprises:
fluidically coupling a primary stage sample separation device (10) to a secondary stage sample separation device (90), in particular a secondary stage sample separation device (90) according to any of claims 1 to 13, by attaching a fluidic interface (89) of the secondary stage sample separation device (90) to a fluid outlet of the primary stage sample separation device (10);
carrying out a primary stage separation of the fluidic sample by the primary stage sample separation device (10);
carrying out a secondary stage separation of at least a portion of the fluidic sample by the secondary stage sample separation device (90) by further separating at least a portion of the separated fluidic sample provided at the fluidic interface (89);
after carrying out the primary stage separation and the secondary stage separation, detaching the fluidic interface (89) from the primary stage sample separation device (10) to thereby fluidically decouple the secondary stage sample separation device (90) from the primary stage sample separation device (10);
at least in the event of an overpressure or of an excessive pressure increase in the secondary stage sample separation device (90), reducing pressure for preventing a detector (50) of the primary stage sample separation device (10) detecting separation of the fluidic sample from being exposed to the overpressure.

## Patentansprüche

1. Eine Sekundär Stadium Probentrennvorrichtung (90) zum Trennen von zumindest einem Teil einer fluidischen Probe, wobei die Sekundär Stadium Probentrennvorrichtung (90) aufweist:
eine fluidische Schnittstelle (89), die konfiguriert ist, eine lösbare fluidische Kopplung zu bilden zwischen einer Primär Stadium Probentrennvorrichtung (10) und der Sekundär Stadium Probentrennvorrichtung (90), so dass die fluidische Probe, welche mittels der Primär Stadium Probentrennvorrichtung (10) getrennt ist, fluidisch verfügbar ist für die Sekundär Stadium Probentrennvorrichtung (90) über die fluidische Schnittstelle (89) zur weiteren Trennung;
ein Druckminderungs-Mechanismus (44), der konfiguriert ist, den Druck an der fluidischen Schnittstelle (89) zu mindern zumindest für den Fall eines Überdrucks oder einer übermäßigen Druckerhöhung, wobei der Druckminderungs-Mechanismus (44) angeordnet ist ablaufseitig von der fluidischen Schnittstelle (89) und zulaufseitig eines Modulatorventils (98) von der Sekundär Stadium Probentrennvorrichtung (90).

2. Die Sekundär Stadium Probentrennvorrichtung (90) gemäß Anspruch 1, wobei der Druckminderungs-Mechanismus (44) konfiguriert ist zu verhindern, dass der Überdruck beeinträchtigt die fluidisch gekoppelte Primär Stadium Probentrennvorrichtung (10), insbesondere einen Detektor (50) der Primär Stadium Probentrennvorrichtung (10).

3. Die Sekundär Stadium Probentrennvorrichtung (90) gemäß Anspruch 1 oder 2, wobei der Druckminderungs-Mechanismus (44) konfiguriert ist, den Druck an der fluidischen Schnittstelle (89) zu mindern für den Fall eines Überdrucks oder einer übermäßigen Druckerhöhung an einem Modulatorventil (98) der Sekundär Stadium Probentrennvorrichtung (90), insbesondere für den Fall eines Überdrucks oder einer übermäßigen Druckerhöhung, welcher durch einen Schaltvorgang des Modulatorventils (98) der Sekundär Stadium Probentrennvorrichtung (90) hervorgerufen ist.

4. Die Sekundär Stadium Probentrennvorrichtung (90) gemäß irgendeinem der Ansprüche 1 bis 3, wobei der Druckminderungs-Mechanismus (44) konfiguriert ist, Druck an der fluidischen Schnittstelle (89) zu mindern für den Fall eines Überdrucks oder einer übermäßigen Druckerhöhung, welche hervorgerufen ist durch eine zeitweise zumindest teilweise Unfähigkeit der Sekundär Stadium Probentrennvorrichtung (90) fluidisches Probenmaterial von der Primär Stadium Probentrennvorrichtung (10) anzunehmen.

5. Die Sekundär Stadium Probentrennvorrichtung (90) gemäß irgendeinem der Ansprüche 1 bis 4, wobei der Druckminderungs-Mechanismus (44) konfiguriert ist, zumindest vorübergehend fluidisches Probenmaterial aufzunehmen für den Fall einer zweitweisen zumindest teilweisen Unfähigkeit der Sekundär Stadium Probentrennvorrichtung (90) fluidisches Probenmaterial von der Primär Stadium Probentrennvorrichtung (10) anzunehmen.

6. Die Sekundär Stadium Probentrennvorrichtung (90) gemäß irgendeinem der Ansprüche 1 bis 5, wobei der Druckminderungs-Mechanismus (44) konfiguriert ist zu verhindern, dass die Primär Stadium Probentrennvorrichtung (10) fluidisches Probenmaterial pumpt gegen eine fluidisch blockierte Sekundär Stadium Probentrennvorrichtung (90).

7. Die Sekundär Stadium Probentrennvorrichtung (90) gemäß irgendeinem der Ansprüche 1 bis 6, wobei der Druckminderungs-Mechanismus ein Druckentlastungsventil (1100) aufweist, welches insbesondere angeordnet ist zwischen der fluidischen Schnittstelle (89) und einem Modulatorventil (98) der Sekundär Stadium Probentrennvorrichtung (90).

8. Die Sekundär Stadium Probentrennvorrichtung (90) gemäß Anspruch 7, wobei das Druckentlastungsventil (1100) angeordnet und konfiguriert ist:
zu unterbinden Fluss von fluidischer Probe abgesehen von einem fluidischen Pfad (1110) zwischen der fluidischen Schnittstelle (89) und dem Modulatorventil (98) der Sekundär Stadium Probentrennvorrichtung (90) in Abwesenheit von Überdruck; und
abzuspalten fluidische Probe in einen Seitenpfad (1120) durch das Druckentlastungsventil (1100) weg von dem fluidischen Pfad (1110) zwischen der fluidischen Schnittstelle (89) und dem Modulatorventil (98) für den Fall eines Überdrucks.

9. Die Sekundär Stadium Probentrennvorrichtung (90) gemäß irgendeinem der Ansprüche 1 bis 8, wobei der Druckminderungs-Mechanismus (44) aufweist ein elastisches Element (1200), welches elastisch dehnbar ist durch fluidisches Probenmaterial für den Fall eines Überdrucks, um dadurch vorübergehend fluidisches Probenmaterial aufzunehmen zur Druckminderung.

10. Die Sekundär Stadium Probentrennvorrichtung (90) gemäß Anspruch 9, wobei das elastische Element (1200) konfiguriert ist als ein Durchfluss-Element, welches angeordnet ist in einer fluidischen Leitung zwischen der fluidischen Schnittstelle (89) und einem Modulatorventil (98) der Sekundär Stadium Probentrennvorrichtung (90).

11. Die Sekundär Stadium Probentrennvorrichtung (90) gemäß irgendeinem der Ansprüche 1 bis 9, wobei der Druckminderungs-Mechanismus (44) aufweist einen Durchflussbegrenzer (1300), der eine höhere fluidische Impedanz hat als und der in fluidischem Austausch ist mit zumindest Teilen einer fluidischen Leitung (1110) zwischen der fluidischen Schnittstelle (89) und einem Modulatorventil (98) der Sekundär Stadium Probentrennvorrichtung (90).

12. Die Sekundär Stadium Probentrennvorrichtung (90) gemäß Anspruch 9 oder 10 oder 11, wobei das elastische Element (1200) oder der Durchflussbegrenzer (1300) angeordnet sind in einem Seitenpfad (1120) in Bezug auf die fluidische Leitung zwischen der fluidischen Schnittstelle (89) und dem Modulatorventil (98) der Sekundär Stadium Probentrennvorrichtung (90) um abzuspalten fluidische Probe in einen Seitenpfad (1120) durch den Durchflussbegrenzer (1300) weg von dem fluidischen Pfad (1110) zwischen der fluidischen Schnittstelle (89) und dem Modulatorventil (98) für den Fall eines Überdrucks.

13. Die Sekundär Stadium Probentrennvorrichtung (90) gemäß irgendeinem der Ansprüche 1 bis 12, aufweisend einen Flussraten Adapter (88, 352, 370, 98), der konfiguriert ist eine Anpassung durchzuführen zwischen der Flussrate der fluidischen Probe, die durch die Primär Stadium Probentrennvorrichtung (10) zugeführt wird, und einer Flussrate, insbesondere einer kleineren Flussrate, mit welcher die Sekundär Stadium Probentrennvorrichtung (90) konfiguriert ist betrieben zu werden, wobei der Flussraten Adapter (88, 352, 370, 98) konfiguriert ist die Anpassung durchzuführen:
mittels Teilens der fluidischen Probe, die zur Sekundär Stadium Probentrennvorrichtung (90) zugeführt wird,
in einen ersten Flusspfad, welcher der Flussrate entspricht, die für die Sekundär Stadium Probentrennvorrichtung (90) zulässig ist, und der genutzt wird für eine weitere Trennung zumindest eines Teils der fluidischen Probe, und
in einen zweiten Fluss oder
mittels Puffems aufeinander folgender Teile der fluidischen Probe, die mittels der Primär Stadium Probentrennvorrichtung (10) zugeführt wird, in eine Vielzahl von Puffervolumina (300, 301), insbesondere Proben-Schleifen, und zum nachfolgenden Weiterleiten der gepufferten Teile der fluidischen Probe in den verschiedenen Puffervolumina (300, 301) zu der weiteren Trennung, oder
mittels Definierens einer Flussrate zu einem oder einer Vielzahl von Puffervolumina (300, 301) auf eine besondere Weise, so dass ein bestimmter, repräsentativer Teil der fluidischen Probe in Zusammenhang mit einem interessierenden Bereich (420) in einem Trennspektrum, insbesondere in einem Chromatogramm, geparkt wird zum nachfolgenden Weiterleiten dieses gepufferten Teils als die fluidische Probe für die weitere Trennung, oder
mittels Führens zumindest eines Teils der fluidischen Probe, welche von der Primär Stadium Probentrennvorrichtung (10) zugeführt wird, in einen ausgewählten von einer Vielzahl von Proben Trennpfaden (302) in der Sekundär Stadium Probentrennvorrichtung (90), wobei jeder der Proben Trennpfade (302) gemäß einer zugewiesenen Flussrate betreibbar ist, so dass eine beste Übereinstimmung erzielt wird zwischen der Flussrate der Primär Stadium Probentrennvorrichtung (10) mit einer entsprechenden Flussrate, welche dem ausgewählten aus den mehreren Proben Trennpfaden (302) zugewiesen ist.

14. Eine Probentrennvorrichtung (100) um eine mehrstufige Trennung einer fluidischen Probe auszuführen, wobei die Probentrennvorrichtung (100) aufweist:
eine Primär Stadium Probentrennvorrichtung (10) um eine fluidische Probe zu trennen;
eine Sekundär Stadium Probentrennvorrichtung (90) gemäß irgendeinem der Ansprüche 1 bis 13, welche fluidisch koppelbar oder gekoppelt ist, insbesondere lösbar fluidisch koppelbar, an eine Primär Stadium Probentrennvorrichtung (10) über die fluidische Schnittstelle (89) und welche konfiguriert ist zum Trennen zumindest eines Teils der fluidischen Probe, die zugeführt und getrennt wird durch die Primär Stadium Probentrennvorrichtung (10).

15. Ein Verfahren eine mehrstufige Trennung einer fluidischen Probe auszuführen, wobei das Verfahren aufweist:
fluidisches Koppeln einer Primär Stadium Probentrennvorrichtung (10) an eine Sekundär Stadium Probentrennvorrichtung (90), insbesondere eine Sekundär Stadium Probentrennvorrichtung (90) gemäß irgendeinem der Ansprüche 1 bis 13, durch Anschließen einer fluidischen Schnittstelle (89) der Sekundär Stadium Probentrennvorrichtung (90) an einen Fluid Auslass der Primär Stadium Probentrennvorrichtung (10);
Ausführen einer Primär Stadium Trennung der fluidischen Probe durch die Primär Stadium Probentrennvorrichtung (10);
Ausführen einer Sekundär Stadium Trennung zumindest eines Teils der fluidischen Probe durch die Sekundär Stadium Probentrennvorrichtung (90) durch weiteres Trennen zumindest eines Teils der getrennten fluidischen Probe, welche an der fluidischen Schnittstelle bereitgestellt wird (89);
nach Ausführen der Primär Stadium Trennung und der Sekundär Stadium Trennung, Abtrennen der fluidischen Schnittstelle (89) von der Primär Stadium Probentrennvorrichtung (10), um dadurch fluidisch zu entkoppeln die Sekundär Stadium Probentrennvorrichtung (90) von der Primär Stadium Probentrennvorrichtung (10);
zumindest für den Fall eines Überdrucks oder einer übermäßigen Druckerhöhung in der Sekundär Stadium Probentrennvorrichtung (90), Mindern des Druckes um zu verhindern, dass ein Detektor (50) der Primär Stadium Probentrennvorrichtung (10), welcher die Trennung der fluidischen Probe nachweist, dem Überdruck ausgesetzt wird.

## Revendications

1. Dispositif de séparation d'échantillon à étage secondaire (90) pour séparer au moins une portion d'un échantillon fluidique, dans lequel le dispositif de séparation d'échantillon à étage secondaire (90) comprend :
une interface fluidique (89) configurée pour former un couplage fluidique détachable entre un dispositif de séparation d'échantillon à étage primaire (10) et le dispositif de séparation d'échantillon à étage secondaire (90) de sorte que l'échantillon fluidique séparé par le dispositif de séparation d'échantillon à étage primaire (10) puisse être fourni fluidiquement au dispositif de séparation d'échantillon à étage secondaire (90) via l'interface fluidique (89) pour une séparation supplémentaire ;
un mécanisme de réduction de pression (44) configuré pour réduire la pression au niveau de l'interface fluidique (89) au moins dans le cas d'une surpression ou d'une augmentation excessive de pression, dans lequel le mécanisme de réduction de pression (44) est agencé en aval de l'interface fluidique (89) et en amont d'une soupape modulatrice (98) du dispositif de séparation d'échantillon à étage secondaire (90).

2. Dispositif de séparation d'échantillon à étage secondaire (90) selon la revendication 1, dans lequel le mécanisme de réduction de pression (44) est configuré pour empêcher la surpression d'affecter le dispositif de séparation d'échantillon à étage primaire (10) couplé fluidiquement, en particulier un détecteur (50) du dispositif de séparation d'échantillon à étage primaire (10).

3. Dispositif de séparation d'échantillon à étage secondaire (90) selon la revendication 1 ou 2, dans lequel le mécanisme de réduction de pression (44) est configuré pour réduire la pression au niveau de l'interface fluidique (89) dans le cas d'une surpression ou d'une augmentation excessive de pression au niveau d'une soupape modulatrice (98) du dispositif de séparation d'échantillon à étage secondaire (90), en particulier dans le cas d'une surpression ou d'une augmentation excessive de pression générée par une opération de commutation d'une soupape modulatrice (98) du dispositif de séparation d'échantillon à étage secondaire (90).

4. Dispositif de séparation d'échantillon à étage secondaire (90) selon l'une quelconque des revendications 1 à 3, dans lequel le mécanisme de réduction de pression (44) est configuré pour réduire la pression au niveau de l'interface fluidique (89) dans le cas d'une surpression ou d'une augmentation excessive de pression générée par une incapacité temporaire au moins partielle du dispositif de séparation d'échantillon à étage secondaire (90) de recevoir un matériau d'échantillon fluidique en provenance du dispositif de séparation d'échantillon à étage primaire (10).

5. Dispositif de séparation d'échantillon à étage secondaire (90) selon l'une quelconque des revendications 1 à 4, dans lequel le mécanisme de réduction de pression (44) est configuré pour contenir au moins temporairement un matériau d'échantillon fluidique dans le cas d'une incapacité temporaire au moins partielle du dispositif de séparation d'échantillon à étage secondaire (90) de recevoir un matériau d'échantillon fluidique en provenance du dispositif de séparation d'échantillon à étage primaire (10).

6. Dispositif de séparation d'échantillon à étage secondaire (90) selon l'une quelconque des revendications 1 à 5, dans lequel le mécanisme de réduction de pression (44) est configuré pour empêcher le dispositif de séparation d'échantillon à étage primaire (10) de pomper un matériau d'échantillon fluidique contre un dispositif de séparation d'échantillon à étage secondaire (90) à blocage fluidique.

7. Dispositif de séparation d'échantillon à étage secondaire (90) selon l'une quelconque des revendications 1 à 6, dans lequel le mécanisme de réduction de pression (44) comprend une soupape de détente de pression (1100), agencée en particulier entre l'interface fluidique (89) et une soupape modulatrice (98) du dispositif de séparation d'échantillon à étage secondaire (90).

8. Dispositif de séparation d'échantillon à étage secondaire (90) selon la revendication 7, dans lequel la soupape de détente de pression (1100) est agencée et configurée :
pour désactiver un écoulement d'échantillon fluidique loin d'un trajet fluidique (1110) entre l'interface fluidique (89) et une soupape modulatrice (98) du dispositif de séparation d'échantillon à étage secondaire (90) en l'absence de surpression ; et
pour scinder un échantillon fluidique en un trajet de côté (1120) à travers la soupape de détente de pression (1100) en éloignement du trajet fluidique (1110) entre l'interface fluidique (89) et la soupape modulatrice (98) dans le cas d'une surpression.

9. Dispositif de séparation d'échantillon à étage secondaire (90) selon l'une quelconque des revendications 1 à 8, dans lequel le mécanisme de réduction de pression (44) comprend un organe élastique (1200) étant élastiquement extensible par un matériau d'échantillon fluidique dans le cas d'une surpression pour contenir ainsi temporairement un matériau d'échantillon fluidique pour réduire la pression.

10. Dispositif de séparation d'échantillon à étage secondaire (90) selon la revendication 9, dans lequel l'organe élastique (1200) est configuré en tant qu'organe d'écoulement agencé dans un conduit fluidique (1110) entre l'interface fluidique (89) et une soupape modulatrice (98) du dispositif de séparation d'échantillon à étage secondaire (90).

11. Dispositif de séparation d'échantillon à étage secondaire (90) selon l'une quelconque des revendications 1 à 9, dans lequel le mécanisme de réduction de pression (44) comprend un limiteur de fluide (1300) ayant une impédance fluidique plus élevée que et étant en communication fluidique avec au moins des portions d'un conduit fluidique (1110) entre l'interface fluidique (89) et une soupape modulatrice (98) du dispositif de séparation d'échantillon à étage secondaire (90).

12. Dispositif de séparation d'échantillon à étage secondaire (90) selon la revendication 9 ou 10 ou 11, dans lequel l'organe élastique (1200) ou le limiteur de fluide (1300) est agencé dans un trajet de côté (1120) par rapport au conduit fluidique entre l'interface fluidique (89) et la soupape modulatrice (98) du dispositif de séparation d'échantillon à étage secondaire (90) pour scinder un échantillon fluidique dans le trajet de côté (1120) par l'intermédiaire du limiteur de fluide (1300) en éloignement du trajet fluidique (1110) entre l'interface fluidique (89) et la soupape modulatrice (98) dans le cas d'une surpression.

13. Dispositif de séparation d'échantillon à étage secondaire (90) selon l'une quelconque des revendications 1 à 12, comprenant un adaptateur de débit (88, 352, 370, 98) configuré pour réaliser une adaptation entre le débit de l'échantillon fluidique fourni par le dispositif de séparation d'échantillon à étage primaire (10) et un débit, en particulier un débit plus petit, selon lequel le dispositif de séparation d'échantillon à étage secondaire (90) est configuré pour fonctionner, dans lequel l'adaptateur de débit (88, 352, 370, 98) est configuré pour réaliser l'adaptation :
par scission de l'échantillon fluidique fourni au dispositif de séparation d'échantillon à étage secondaire (90) en un premier trajet d'écoulement correspondant au débit acceptable par le dispositif de séparation d'échantillon à étage secondaire (90) et utilisé pour une séparation supplémentaire d'au moins une portion de l'échantillon fluidique, et en un second écoulement, ou
par tamponnage de portions consécutives de l'échantillon fluidique fourni par le dispositif de séparation d'échantillon à étage primaire (10) en une pluralité de volumes tampons (300, 301), en particulier des boucles d'échantillon, et pour réacheminer consécutivement les portions tamponnées de l'échantillon fluidique dans les divers volumes tampons (300, 301) pour la séparation supplémentaire, ou
par définition d'un débit pour un ou une pluralité de volumes tampons (300, 301), de manière particulière, de façon à immobiliser une portion représentative spécifique de l'échantillon fluidique par rapport à une région d'intérêt (420) dans un spectre de séparation, en particulier dans un chromatogramme, pour réacheminer consécutivement cette portion tamponnée en tant qu'échantillon fluidique pour la séparation supplémentaire, ou
par guidage d'au moins une portion de l'échantillon fluidique fourni par le dispositif de séparation d'échantillon à étage primaire (10) dans un trajet sélectionné parmi une pluralité de trajets de séparation d'échantillon (302) dans le dispositif de séparation d'échantillon à étage secondaire (90), chacun des trajets de séparation d'échantillon (302) étant opérationnel conformément à un débit attribué, de façon à obtenir une meilleure concordance entre le débit du dispositif de séparation d'échantillon à étage primaire (10) et un débit correspondant attribué au trajet sélectionné parmi les multiples trajets de séparation d'échantillon (302).

14. Système de séparation d'échantillon (100) pour réaliser une séparation à étages multiples d'un échantillon fluidique, dans lequel le système de séparation d'échantillon (100) comprend :
un dispositif de séparation d'échantillon à étage primaire (10) pour séparer un échantillon fluidique ;
un dispositif de séparation d'échantillon à étage secondaire (90) selon l'une quelconque des revendications 1 à 13 pouvant être couplé ou étant couplé fluidiquement, en particulier pouvant être couplé fluidiquement de façon détachable, au dispositif de séparation d'échantillon à étage primaire (10) via l'interface fluidique (89) et configuré pour séparer au moins une portion de l'échantillon fluidique fourni et séparé par le dispositif de séparation d'échantillon à étage primaire (10).

15. Procédé de réalisation d'une séparation à étages multiples d'un échantillon fluidique, dans lequel le procédé comprend :
le couplage fluidique d'un dispositif de séparation d'échantillon à étage primaire (10) à un dispositif de séparation d'échantillon à étage secondaire (90), en particulier un dispositif de séparation d'échantillon à étage secondaire (90) selon l'une quelconque des revendications 1 à 13, par la fixation d'une interface fluidique (89) du dispositif de séparation d'échantillon à étage secondaire (90) à un orifice de sortie de fluide du dispositif de séparation d'échantillon à étage primaire (10) ;
la réalisation d'une séparation à étage primaire de l'échantillon fluidique par le dispositif de séparation d'échantillon à étage primaire (10) ;
la réalisation d'une séparation à étage secondaire d'au moins une portion de l'échantillon fluidique par le dispositif de séparation d'échantillon à étage secondaire (90) en séparant en outre au moins une portion de l'échantillon fluidique séparé fourni au niveau de l'interface fluidique (89) ;
après la réalisation de la séparation à étage primaire et de la séparation à étage secondaire, le détachement de l'interface fluidique (89) du dispositif de séparation d'échantillon à étage primaire (10) pour découpler ainsi fluidiquement le dispositif de séparation d'échantillon à étage secondaire (90) du dispositif de séparation d'échantillon à étage primaire (10) ;
au moins dans le cas d'une surpression ou d'une augmentation excessive de pression dans le dispositif de séparation d'échantillon à étage secondaire (90), la réduction de pression pour empêcher un détecteur (50) du dispositif de séparation d'échantillon à étage primaire (10) détectant une séparation de l'échantillon fluidique d'être exposé à la surpression.
